# EUROPEAN PATENT APPLICATION

(11) **EP 2 733 273 A1**
(43) Date of publication of application: **21.05.2014**
(21) Application number: 12811660.5
(22) Date of filing: 11.07.2012
(51) Int. Cl.: E04B 1/94

(54) **FIRE-RESISTANT REINFORCEMENT STRUCTURE, FIRE-RESISTANT REINFORCEMENT ARCHITECTURAL MEMBER, FIRE-RESISTANT REINFORCEMENT METHOD FOR ARCHITECTURAL MEMBER**

(30) Priority: 11.07.2011 JP 2011152498
(71) Applicant: Sekisui Chemical Co., Ltd., Osaka 530-8565 (JP)
(72) Inventor: MIYATA, Shingo, Hasuda-shi Saitama 349-0198 (JP); OOTSUKA, Kenji, Hasuda-shi Saitama 349-0198 (JP); TONO, Masaki, Hasuda-shi Saitama 349-0198 (JP)
(74) Representative: Ter Meer Steinmeister & Partner
(86) International application number: PCT/JP2012/004494
(87) International publication number: WO 2013/008465

(57) **Abstract**

This invention provides a fire-resistant reinforcement structure which facilitates work for improving fire resistance of architectural members such as pipes, a door, and a sash, a fire-resistant reinforcement architectural member, and a fire-resistant reinforcement method for an architectural member.

A fire-resistant reinforcement structure is formed by pouring a thermally expandable fire-resistant material into a gap in and/or the interior of an architectural member, and characterized in that the viscosity of the thermally expandable heat-resistant material at 25° C before the thermally expandable fire-resistant material is poured into the gap in and/or the interior of the architectural member is in the range of 1,000-100,000 mPa·s, and the thermally expandable fire-resistant material loses fluidity at 25°C after being poured into the gap in and/or the interior of the architectural member.

## Description

### TECHNICAL FIELD

The present invention relates to a refractory reinforcement structure, a refractory reinforcement architectural member and a refractory reinforcement method for the architectural member, more specifically to a refractory reinforcement structure of pipes, a door, a sash, a wall, a roof, a floor, etc., installed on structures such as a residence, etc., a refractory reinforcement architectural member and a refractory reinforcement method for the architectural member.

### BACKGROUND ART

As an architectural member to be installed on an opening, etc., of structures such as a residence, pipes, a door, a sash, a wall, a roof, a floor, etc., have conventionally been used.

When a fire occurred at the inside or outside of the structures such as a residence, it is necessary to check the spread of the fire. It is an important task to heighten fire resistance of an architectural member such as pipes, a door, a sash, a wall, a roof, a floor, etc., so as not to spread a flame of the fire propagating the architectural member such as pipes, a door, a sash, a wall, a roof, a floor, etc.

In connection with the problems, it has been proposed a technique which heightens fire resistance of an architectural member such as a sash, etc.

More specifically, it has been proposed a refractory resin sash which comprises a sash equipped with a frame material comprising a synthetic resin and a plate material having fire resistance, wherein a plural number of cavities are provided to the longitudinal direction of a frame material to be used for the sash, and a thermally expansible refractory member and a woody member are inserted into the cavities (Patent Document 1).

In this refractory resin sash, a thermally expansible refractory member is inserted into the longitudinal direction of a frame material, so that even when the frame material comprising the synthetic resin is melted or destroyed by fire, a thermal expansion residue by the thermally expansible refractory member insulates a flame or heat of the fire. A refractory reinforcement structure can be obtained by installing the sash for an opening of the structure, etc.

Also, in connection with the above-mentioned problems, it has been proposed a technique which heightens fire resistance of an architectural member such as pipes, etc.

More specifically, there exists a structure in which a through hole(s) is/are provided to a partition provided at a compartment of a structure such as a building, shipping, etc., and pipes are inserted into the through hole(s).

To heighten fire resistance of the architectural member such as pipes, etc., it has been proposed a structure in which a thermally expansible refractory sheet is provided at around the pipes inserted into the through hole(s) (Patent Document 2).

When the structure is exposed to heat of a fire, etc., the thermally expansible refractory sheet provided at around the pipes is expanded to form a thermal expansion residue. The thermal expansion residue partitions the heat of a fire, etc., so that the pipes can be protected.

### PRIOR ART DOCUMENTS

### PATENT DOCUMENT

Patent Document 1: JP 2005-9305A
Patent Document 2: JP 2002-119608A

### SUMMARY OF THE INVENTION

### PROBLEMS TO BE SOLVED BY THE INVENTION

As explained above, when the thermally expansible refractory member is previously inserted into an inside of a cavity of the frame material to be used for the sash, fire resistance of the sash can be heightened by the above-mentioned prior art technique.

However, when the thermally expansible refractory member is not inserted into an inside of a cavity of the frame material to be used for the sash, it must be necessary to insert the thermally expansible refractory member into the inside of the cavity of the frame material to be used for the sash afterward.

The cavity at the inside of the frame material to be used for the sash is usually located at the position which is not visible from the outside, so that for inserting a thermally expansible refractory member into inside of the cavity of the frame material, it is necessary to disassemble the frame material by removing the sash from an opening of the structures such as a residence, etc.

However, when the opening is faced to the outside of the structures such as a residence, etc., if the sash is removed from the opening, there is no material that separates the inside and the outside of the structures such as a residence, etc., so that there is a problem that a temperature control, etc., at the inside of the structures such as a residence, etc., becomes difficult.

There is also a problem that rain or a wind is entered into inside of the structures such as a residence, etc., when rain falls or a wind is blowing at the outside.

These problems become more serious when the residence, etc., are a high-rise apartment, a high-rise buildings, etc., or the season is a rainy season, etc., with much rainfall or a winter season with much snowfall, etc.

In order to cope with the problems, it can be considered a means that a closure plate is separately prepared, and the opening is closed by the closure plate during the time when the sash is removed from the opening of the structures such as a residence, etc.

However, since a shape of the sash at the actual construction sites is various, so that a number of closure plates that match the shape of the respective sashes must be prepared with every construction sites, whereby there is a problem that an operation to heighten fire resistance of the sash becomes complicated and the operation is time-consuming.

Meanwhile, when pipes are inserted into a through hole(s) provided at the partition which is provided at the compartment of a structure such as a building, shipping, etc., a gap between the pipes and the through hole(s) is not necessarily secured sufficiently.

Since a number of the pipes are inserted into the through hole(s), if the gap between the pipes and the through hole(s) is not sufficient, there is a case where the outer surfaces of the pipes are contacted with the inner surface of the through hole(s), etc.

In this case, there was a problem that it becomes difficult to set up a thermally expansible refractory sheet at outer peripheries of the pipes.

These problems are not limited in the case of the sash, pipes, etc., and also causes similarly even when fire resistance of a door, wall, a roof, a floor, etc., is to be heightened.

An object of the present invention is to provide a refractory reinforcement structure, a refractory reinforcement architectural member, and a refractory reinforcement method for the architectural member wherein an operation of heightening fire resistance of an architectural member such as pipes, a door, sash, wall, a roof, a floor, etc., is easy.

### MEANS TO SOLVE THE PROBLEMS

The present inventors have intensively studied to solve the above-mentioned problems, and as a result, they have found that a refractory reinforcement structure in which a thermally expansible refractory material has been injected into the architectural member, and a refractory reinforcement architectural member are comply with the objects of the present invention, whereby they have accomplished the present invention.

That is, the present invention is to provide,
[1] a refractory reinforcement structure which is a refractory reinforcement structure in which a thermally expansible refractory material is injected into at least one of a gap and an inside of an architectural member,
a viscosity at 25°C of the thermally expansible refractory material before injecting into at least one of the gaps and the inside of the architectural member is in a range of 1,000 to 100,000 mPa·s, and
the thermally expansible refractory material loses its fluidity at 25°C after injecting into at least one of the gaps and the inside of the architectural member.

Also, one of the present invention is to provide,
[2] the refractory reinforcement structure described in the above [1], wherein the refractory reinforcement structure contains a refractory reinforcement architectural member in which a thermally expansible refractory material is injected into an architectural member having a hollow part,
the architectural member has at least a frame material in which a cavity is formed at an inside thereof along with the longitudinal direction, and a plate material having fire resistance,
the plate material having fire resistance is supported by the frame material, and the thermally expansible refractory material is injected into a cavity at an inside of the frame material.

Further, one of the present invention is to provide,
[3] the refractory reinforcement structure described in the above [1] or [2], which is a refractory reinforcement structure containing a refractory reinforcement architectural member in which a thermally expansible refractory material is injected into at least one of the gaps and the inside of the architectural member,
the architectural member has two or more plate materials, and
the thermally expansible refractory material is injected into a space formed between the plate materials facing to each other.

Moreover, one of the present invention is to provide,
[4] the refractory reinforcement structure described in any one of the above [1] to [3], which is a refractory reinforcement structure containing a partition provided at a compartment of the structure, a through hole(s) provided at the partition, and pipes inserted into the through hole(s),
the gap of the architectural member is a gap between an inner surface of the through hole(s) and an outer surface of the pipes, and
the thermally expansible refractory material is injected into the gap between the inner surface of the through hole(s) and the outer surface of the pipes.

Furthermore, one of the present invention is to provide,
[5] the refractory reinforcement structure described in any one of the above [1] to [4], wherein a net-shaped sheet is arranged at least one of the gaps and the inside of the architectural member.

Also, one of the present invention is to provide,
[6] the refractory reinforcement structure described in any one of the above [1] to [5], wherein the thermally expansible refractory material contains at least a reaction curable resin component, a thermally expansible component and an inorganic filler.

Further, one of the present invention is to provide,
[7] the refractory reinforcement structure described in any one of the above [1] to [6], wherein the reaction curable resin component contained in thermally expansible refractory material is at least one selected from the group consisting of a urethane resin foam, an isocyanurate resin foam, an epoxy resin foam, a phenol resin foam, a urea resin foam, an unsaturated polyester resin foam, an alkyd resin foam, a melamine resin foam, a diallylphthalate resin foam and a silicone resin foam.

Moreover, one of the present invention is to provide,
[8] the refractory reinforcement structure described in any one of the above [1] to [7], wherein the thermally expansible component contained in the thermally expansible refractory material contains at least one of thermally expansive graphite and a pulverized product of a molded material of the thermally expansible resin composition.

Furthermore, one of the present invention is to provide,
[9] the refractory reinforcement structure described in any one of the above [1] to [8], wherein the thermally expansible refractory material contains a phosphorus compound.

Also, one of the present invention is to provide,
[10] the refractory reinforcement structure described in any one of the above [1] to [9], wherein the inorganic filler contained in the thermally expansible refractory material contains calcium carbonate.

Still further, the present invention is to provide,
[11] a refractory reinforcement method for an architectural member which is a refractory reinforcement method of an architectural member installed to a structure, and comprises at least
a step of injecting a thermally expansible refractory material having a viscosity at 25°C of in a range of 1,000 to 100,000 mPa·s into at least one of a gap and an inside of the architectural member, and
a step of reacting the thermally expansible refractory material in at least one of the gaps and the inside of the architectural member to lose fluidity of the thermally expansible refractory material.

Also, one of the present invention is to provide,
[12] the refractory reinforcement method for the architectural member described in the above [11], wherein the architectural member has at least a frame material in which a cavity is formed at an inside thereof along with a longitudinal direction and a plate material having fire resistance, and
the plate material having fire resistance is supported by the frame material, and the method comprises a step of injecting the thermally expansible refractory material into the cavity at the inside of the frame material, and a step of losing fluidity of the thermally expansible refractory material by reacting the thermally expansible refractory material at the cavity at the inside of the frame material.

Further, one of the present invention is to provide,
[13] the refractory reinforcement method for the architectural member described in the above [11] or [12], wherein the architectural member has two or more plate materials, and the method comprises
a step of injecting the thermally expansible refractory material into a space formed between the plate materials which face each other, and
a step of reacting the thermally expansible refractory material at the inside of the space to lose fluidity of the thermally expansible refractory material.

Moreover, one of the present invention is to provide,
[14] the refractory reinforcement method for the architectural member described in any one of the above [11] to [13], wherein the architectural member contains a partition provided at a compartment of the structure, a through hole(s) provided at the partition, and pipes inserted into the through hole(s), and the method comprises
a step of injecting the thermally expansible refractory material into the gap the inside of the through hole(s) and the outside of the pipes, and
a step of reacting the thermally expansible refractory material at the gap between the inside of the through hole(s) and the outside of the pipes to lose fluidity of the thermally expansible refractory material.

Furthermore, one of the present invention is to provide,
[15] the refractory reinforcement method for the architectural member described in any one of the above [11] to [14], wherein the thermally expansible refractory material contains at least a reaction curable resin component, a thermally expansible component and an inorganic filler.

Also, one of the present invention is to provide,
[16] the refractory reinforcement method for the architectural member described in any one of the above [11] to [15], wherein the reaction curable resin component contained in the thermally expansible refractory material is at least one selected from the group consisting of a urethane resin foam, an isocyanurate resin foam, an epoxy resin foam, a phenol resin foam, a urea resin foam, an unsaturated polyester resin foam, an alkyd resin foam, a melamine resin foam, a diallylphthalate resin foam and a silicone resin foam.

Further, one of the present invention is to provide,
[17] the refractory reinforcement method for the architectural member described in any one of the above [11] to [16], which is a refractory reinforcement method using a bag into which a thermally expansible refractory material is put therein, wherein
the step of injecting the thermally expansible refractory material into at least one of the gaps and the inside of the architectural member comprises
a step of initiating expansion of the reaction curable resin component contained in the thermally expansible refractory material put into the bag,
a step of releasing the thermally expansible refractory material containing the reaction curable resin component started to expansion from the bag, and
a step of injecting the released thermally expansible refractory material into at least one of the gaps and the inside of the architectural member.

Still further, the present invention is to provide,
[18] a refractory reinforcement architectural member to be used for the refractory reinforcement structure described in any one of the above [1] to [10], wherein the architectural member is either of pipes, a door, sash, wall, a roof or a floor,
the refractory reinforcement architectural member comprises a thermally expansible refractory material being injected thereinto,
a viscosity at 25°C of the thermally expansible refractory material before injecting into at least one of the gaps and the inside of the architectural member is in a range of 1,000 to 100,000 mPa·s, and
the thermally expansible refractory material loses its fluidity at 25°C after injecting into at least one of the gaps and the inside of the architectural member.

Also, one of the present invention is to provide,
[19] the refractory reinforcement architectural member described in the above [18], which comprises a refractory reinforcement architectural member in which a thermally expansible refractory material is injected into an inside of an architectural member having a hollow part.

Further, one of the present invention is to provide,
[20] the refractory reinforcement architectural member described in the above or [19], wherein the thermally expansible refractory material is injected by contacting with at least one of an inner surface of a cavity at the outermost side among the cavities at the inside of the frame material and an inner surface of a space at the outermost side among the spaces formed between the plate materials.

1 Moreover, one of the present invention is to provide,
[21] the refractory reinforcement architectural member described in the above [18] or [19], wherein the architectural member is at least one selected from the group consisting of a synthetic resin material, a metal material, a wood material and an inorganic material.

### EFFECTS OF THE INVENTION

The refractory reinforcement structure according to the present invention comprises a thermally expansible refractory material being injected into at least one of the gaps and the inside of the architectural member.

When it is found out that fire resistance of an architectural member which has already been installed in structures such as a residence, etc., is low, it is necessary to insert a thermally expansible refractory member into an inside thereof after subjecting to an operation such as removal of the architectural member from the structure, etc. Thus, the conventional refractory structure requires a time-consuming work for fire resistant reinforcement.

To the contrary, the refractory reinforcement structure of the present invention can be obtained by injecting the thermally expansible refractory material into inside of the architectural member, so that it is excellent in productivity per a unit time.

Also, the thermally expansible refractory material to be used in the present invention has a viscosity at 25°C before injecting into the inside of the architectural member in the range of 1,000 to 100,000 mPa·s, and has fluidity. According to the fluidity, the thermally expansible refractory material can be easily injected into at least one of the gaps and the inside of the architectural member without depending on a shape or a size of the gap and the inside of the architectural member. Therefore, the refractory reinforcement structure of the present invention can be easily obtained.

Also, the thermally expansible refractory material to be used in the present invention loses its fluidity at the inside of the architectural member, so that it can prevent from leaking out the thermally expansible refractory material from the inside of the architectural member to the outside.

Further, it can be prevented from localizing the thermally expansible component, etc., contained in the thermally expansible refractory material at the inside of the architectural member. Accordingly, the refractory reinforcement structure of the present invention can show stable refractory performance without depending on a shape or a size, etc., of the architectural member.

Moreover, when the refractory reinforcement structure according to the present invention is exposed to flame such as a fire, etc., the thermally expansible refractory material contained in the refractory reinforcement structure is expanded to form a thermal expansion residue.

The thermal expansion residue has a role as a heat insulating layer, so that transmission of heat of a flame of the fire can be delayed from a side at which the fire is generated to a side at which no fire is generated through the refractory reinforcement structure.

Also, even when a gap, etc., is generated at the refractory reinforcement structure by deforming, melting or burning a part of the frame material or the plate material, etc., contained in the refractory reinforcement structure due to heat of the fire, etc., the thermally expansible refractory material at the inside expands to form a thermal expansion residue. The thermal expansion residue occludes the gap generated at the refractory reinforcement structure, so that the spread of the fire of the structures such as a residence, etc., can be prevented.

Further, when a foaming material, for example, a urethane resin foam, etc., is used as a reaction curable resin component of the thermally expansible refractory material to be used in the present invention, bubbles can be contained at the inside of the thermally expansible refractory material injected into the inside of the architectural member.

According to the above, the refractory reinforcement structure excellent in heat insulating property can be obtained.

Moreover, the refractory reinforcement method according to the present invention can be carried out by injecting the thermally expansible refractory material into the inside of the architectural member, so that it is excellent in workability.

Furthermore, according to the refractory reinforcement method of the present invention, fire resistance of the architectural member can be easily heightened without depending on a shape or a size, etc., of the architectural member.

Moreover, by using the refractory reinforcement architectural member in which a thermally expansible refractory material has been injected into the inside of the architectural member, the refractory reinforcement structure excellent in fire resistance can be easily obtained.

### BRIEF DESCRIPTION OF THE DRAWINGS

[Fig. 1] Fig. 1 is a schematic front view for explaining the first refractory reinforcement structure according to the present invention.
[Fig. 2] Fig. 2 is a principal part cross sectional view of the refractory reinforcement architectural member along with the line A-A of Fig. 1 before injecting the thermally expansible refractory material.
[Fig. 3] Fig. 3 is a principal part cross sectional view of the refractory reinforcement architectural member along with the line A-A of Fig. 1 after injected the thermally expansible refractory material.
[Fig. 4] Fig. 4 is a schematic front view exemplifying the refractory reinforcement architectural member to be used in the first embodiment according to the present invention.
[Fig. 5] Fig. 5 is a schematic front view exemplifying the refractory reinforcement architectural member to be used in the refractory reinforcement structure according to the second embodiment of the present invention.
[Fig. 6] Fig. 6 is a principal part cross sectional view of the refractory reinforcement architectural member along with the line A-A of Fig. 5.
[Fig. 7] Fig. 7 is a schematic front view exemplifying the refractory reinforcement architectural member to be used in the second embodiment according to the present invention.
[Fig. 8] Fig. 8 is a schematic cross sectional view for explaining the refractory reinforcement structure according to the third embodiment of the present invention.
[Fig. 9] Fig. 9 is a schematic cross sectional view for explaining the steps of constructing the refractory reinforcement structure according to the third embodiment.
[Fig. 10] Fig. 10 is a schematic front view for explaining a bag used at the time of constructing the refractory reinforcement structure according to the third embodiment.
[Fig. 11] Fig. 11 shows a cross section of the bag shown in Fig. 10 cut at the dot and dash line A-A portion.
[Fig. 12] Fig. 12 is a schematic perspective view for explaining the state of releasing the polyurethane resin foam from the inside of the bag to be used in the third embodiment.
[Fig. 13] Fig. 13 is a schematic perspective view for explaining the bag as a modified example.
[Fig. 14] Fig. 14 is a schematic perspective view for explaining the bag as a modified example.
[Fig. 15] Fig. 15 is a schematic front view for explaining the structure of the refractory reinforcement architectural member according to Example 1 of the present invention.
[Fig. 16] Fig. 16 is a principal part cross sectional view of the refractory reinforcement architectural member along with the line A-A of Fig. 8 before injecting the thermally expansible refractory material.
[Fig. 17] Fig. 17 is a principal part cross sectional view along with the line A-A of Fig. 8 after injecting the thermally expansible refractory material into a part of the cavity of the frame material.
[Fig. 18] Fig. 18 is a principal part cross sectional view along with the line A-A of Fig. 8 after injecting the thermally expansible refractory material into all of the cavities of the frame material.
[Fig. 19] Fig. 19 is a schematic perspective view for explaining the refractory reinforcement structure according to the fourth embodiment of the present invention.
[Fig. 20] Fig. 20 is a principal part cross sectional view for explaining a gap between a roof member and a heat resistant panel.
[Fig. 21] Fig. 21 is a principal part cross sectional view for explaining a gap between a roof member and a heat resistant panel.
[Fig. 22] Fig. 22 is a schematic cross sectional view for explaining the refractory reinforcement structure according to the fifth embodiment of the present invention.
[Fig. 23] Fig. 23 is a schematic cross sectional view for explaining the refractory reinforcement structure according to the fifth embodiment of the present invention.
[Fig. 24] Fig. 24 is a schematic cross sectional view for explaining the refractory reinforcement structure according to the sixth embodiment of the present invention.
[Fig. 25] Fig. 25 is a schematic cross sectional view for explaining the refractory reinforcement structure according to the sixth embodiment of the present invention.
[Fig. 26] Fig. 26 is a schematic cross sectional view for explaining the refractory reinforcement structure according to the seventh embodiment of the present invention.
[Fig. 27] Fig. 27 is a schematic cross sectional view for explaining the refractory reinforcement structure according to the seventh embodiment of the present invention.

### EMBODIMENTS TO CARRY OUT THE INVENTION

The present invention relates to a refractory reinforcement structure, and an architectural member to be used in the present invention is firstly explained.

The architectural member to be used in the present invention may be mentioned, for example, those installed to a structure (hereinafter referred to as "structures such as a residence, etc.,".) including a building such as a detached house, an apartment house, a high-rise apartment, a high-rise buildings, a commercial architecture, a public facility, etc., and a shipping such as a passenger ship, a transport ship, a ferry boat, etc.

An example thereof may be mentioned, for example, a sash of an opening/closing window, a fixed window, etc., an opening such as a door, a sliding door, a shutter, a revolving door, etc.,
a through hole(s), pipes, etc., to be used for a fireproofing partition penetration structure comprising a partition provided at a compartment of the structure, a through hole(s) provided to the partition, and pipes inserted into the through hole(s), etc., and
a wall, a roof, a floor, etc., but the invention is not limited thereby.

The refractory reinforcement structure according to the present invention comprises a thermally expansible refractory material being injected into the inside, the gap, etc., of the architectural member, and the first embodiment according to the present invention is explained by referring to the drawings.

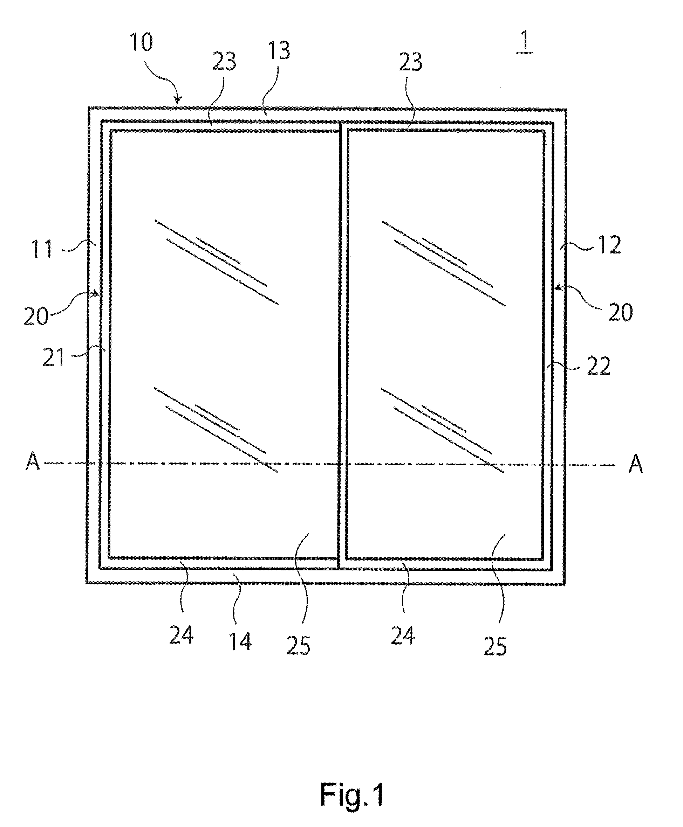

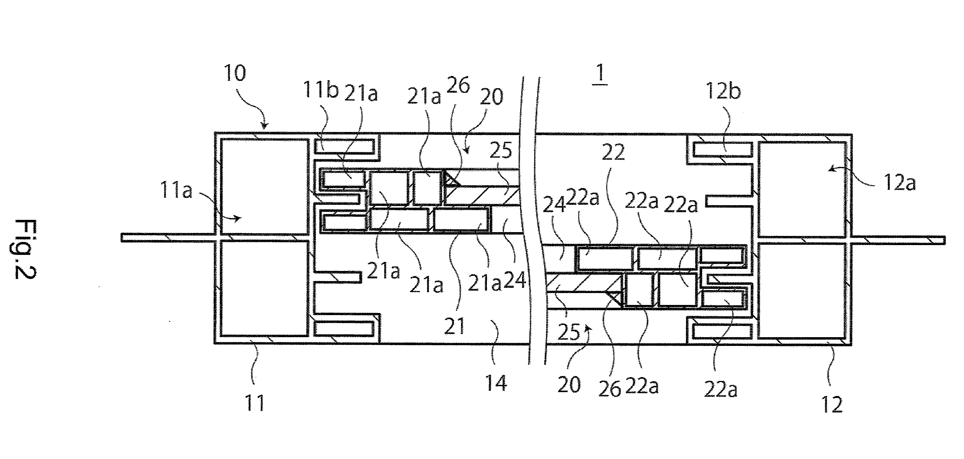

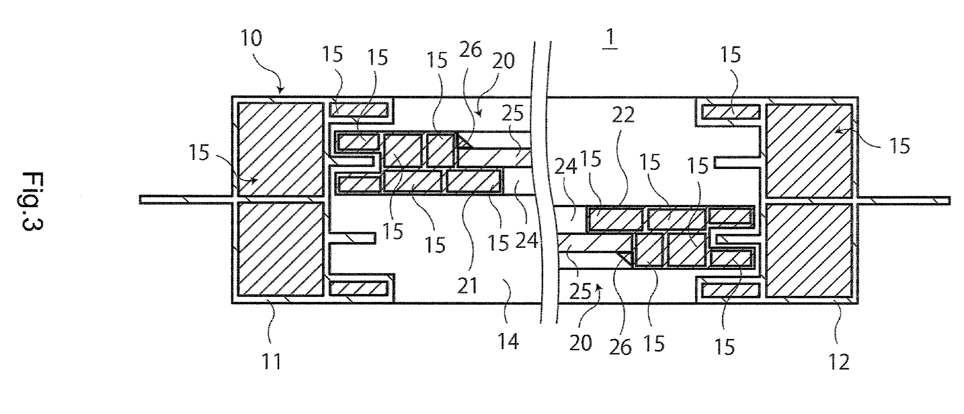

Fig. 1 is a schematic front view for explaining the refractory reinforcement structure according to the first embodiment of the present invention. Also, Fig. 2 is a principal part cross sectional view of the refractory reinforcement architectural member along with the A-A line of Fig. 1 before injecting the thermally expansible refractory material, and Fig. 3 is a principal part cross sectional view of the refractory reinforcement architectural member along with the A-A line of Fig. 1 after injected the thermally expansible refractory material.

As one of examples of the refractory reinforcement architectural member to be used for the refractory reinforcement structure, a double sliding sash is exemplified in Fig. 1 to Fig. 3.

In Figs. 1 to 3, the refractory reinforcement architectural member 1 is a material to be fixed to a rectangular opening formed to the structures such as a residence, etc., and has an open frame body 10 as a peripheral frame material, and double sliding two sheets of plate materials 20 and 20 movable to the horizontal direction at the inside thereof.

By injecting a thermally expansible refractory material 15 into the inside of the open frame body 10, etc., the refractory reinforcement architectural member 1 to be used for the refractory reinforcement structure according to the first embodiment can be obtained.

The open frame body 10 is constituted by left-and-right vertical frame bodies 11 and 12, and upper and lower horizontal frame bodies 13 and 14, and an inside thereof surrounded by the respective frame bodies 11 to 14 is an opening. The two sheets of plate materials 20 and 20 occlude the opening, and the structures thereof are substantially the same constitutions. The plate materials 20 and 20 are formed to a rectangular by the vertical cabinets 21 and 22 as the upper and lower frame materials, and the horizontal cabinets 23 and 24 as the left-and-right frame materials, and have a structure which can occlude the front and rear gaps of the two sheets of plate materials 20 and 20 by superposing the vertical cabinets at the center side on front and rear.

The open frame body 10 and the plate materials 20 and 20 are constituted by combining an aluminum metal constituted by frame bodies 11 to 14 as horizontal and vertical frame materials, and cabinets 21 to 24 as horizontal and vertical frame materials.

A raw material to be used for the open frame body 10 and the plate materials 20 and 20, etc., may be mentioned, for example, a synthetic resin material, a metal material, an inorganic material, wood, etc.

The synthetic resin may be mentioned, for example, a chlorine-containing resin such as polyvinyl chloride, etc., a polyolefin resin such as a polyethylene, a polypropylene, etc., and a polyester resin such as a polyethylene terephthalate, a polybutylene terephthalate, etc.

The metal material may be mentioned, for example, aluminum material, stainless material, steel material, alloy material, etc.

The inorganic material may be mentioned, for example, glass, gypsum, ceramic, cement, calcium silicate, perlite, etc.

The wood may be mentioned, in addition to the natural wood, a molded timber in which a wood piece, a wood sheet, etc., is cured by a resin, etc.

The raw material may be used with a kind or two or more kinds.

The refractory reinforcement architectural member 1 is a material in which, as mentioned above, the two sheets of plate materials 20 and 20 are slidably supported by the open frame body 10.

A window glass 25 comprising a wired glass made of iron located at the inner circumference side is supported by the horizontal and vertical cabinets 21 to 24 which become frame materials of the plate material 20.

The window glass 25 constitutes a plate material having fire resistance, and constitutes a partition surface which divides outside the room and inside of the room of the refractory reinforcement architectural member 1.

Incidentally, the partition surface is not limited to a window glass having translucency, and may be a material having a light shielding property such as a metal plate material and a calcium silicate plate, etc.

The constitution of the refractory reinforcement architectural member 1 of the first embodiment is not particularly limited, and in the frame body to be used in the present invention, the respective up-and-down and left-and-right frame bodies 11 to 14 constituting the sash, and the respective cabinets 21 to 24 are each formed by a molding material of an aluminum metal, and having a plural number of cavities penetrating along with the longitudinal direction.

When a shape of a cross section perpendicular to the longitudinal direction is that having one or a plural number of cavities, it may be in any form known in the art.

Also, as the respective frame bodies and the respective cabinets which are frame materials of the sash, when a synthetic resin such as a hard vinyl chloride, etc., is used in place of the aluminum metal or with the aluminum metal, a hard vinyl chloride is preferably used in the viewpoint of improving fire resistant properties.

The respective frame bodies and the respective cabinets may be formed by an extrusion molding, an injection molding, etc., using a synthetic resin such as a hard vinyl chloride, etc.

The vertical frame bodies 11 and 12 constituting the open frame body 10 are firstly explained in detail.

The vertical frame bodies 11 and 12 are formed by cutting a long material obtained by casting an aluminum metal, and have a cavity/ies penetrating along with the longitudinal direction.

The vertical frame bodies 11 and 12 have two large cavities 11a and 12a having a cross sectional shape of rectangular, and two small width cavities 11b and 12b extending from an edge portion of an inner and outer wall surfaces forming the cavities to the opening side.

Also, at the horizontal frame bodies 13 and 14 constituting the open frame body 10, a plural number of cavities penetrating to the longitudinal direction are formed while it is not shown in the drawing.

The left-and-right vertical cabinets 21 and 22 which became the frame material of the plate material 20 are similarly formed by cutting a long material obtained by casting an aluminum metal, and have six cavities 21a and 22a at the cross section penetrating along with the longitudinal direction. Also, at the horizontal cabinets 23 and 24 which become the frame material of plate material 20, a plural number of cavities penetrating to the longitudinal direction are similarly formed while it is not shown in the drawing. At the inner space of the horizontal and vertical cabinet material, a window glass 25 comprising a wired glass made of iron is fitted. The window glass 25 is located at the step portion of the vertical cabinets 21 and 22, and fixed by a rubber sealing material or a sealing agent 26.

In the refractory reinforcement architectural member 1 to be used for the refractory reinforcement structure of the first embodiment, a thermally expansible refractory material 15 is injected into cavities of the respective frame bodies 11 to 14 made of an aluminum metal and constituting the open frame body 10, and cavities of the respective cabinets 21 to 24 made of an aluminum metal which becomes a frame material of the plate material 20.

More specifically, after the thermally expansible refractory material 15 is injected into the large cavities 11a and 12a of the vertical frame body 11, the thermally expansible refractory material 15 is losing fluidity at the inside of the cavities 11a and 12a.

Incidentally, it is not shown in the drawing, after the thermally expansible refractory material 15 is similarly injected into the cavities penetrating to the longitudinal direction of horizontal frame bodies 13 and 14, the thermally expansible refractory material 15 is losing fluidity at the inside of the cavities of the horizontal frame bodies 13 and 14.

After the thermally expansible refractory material 15 is inserted into the cavities 21a and 22a of the vertical cabinets 21 and 22 of the plate material 20, the thermally expansible refractory material 15 is losing fluidity at the inside of the cavities 21a and 22a.

And, after the thermally expansible refractory material 15 is injected into cavities penetrating to the longitudinal direction of the upper and lower the horizontal cabinets 23 and 24 of the plate material 20 while it is not shown in the drawing, the thermally expansible refractory material 15 is losing fluidity at the inside of the horizontal cabinets 23 and 24.

Thus, into the cavities of the open frame body 10 and the cavities of the plate materials 20 and 20, the thermally expansible refractory material 15 is injected to the direction along with the surface of the window glass 25, and is losing fluidity by contacting with the inner wall surface of the cavities.

These thermally expansible refractory materials 15 are provided in the state parallel to the surface of the window glass 25 constituting the refractory plate material, and forms a refractory surface with the window glass 25. The refractory surface thus formed is filling the respective frame bodies to the direction perpendicular to the glass surface and substantially the whole surfaces along with the window glass except for the thick portion of the respective cabinet materials.

When a plural number of cavities are present at the inside of the frame material to be used in the present invention, it is preferred that the thermally expansible refractory material is injected into the cavity located at the outermost side to the direction perpendicular to the refractory plate material along with the inside of the cavity, in the viewpoint of heightening fire resistance of the refractory reinforcement architectural member used in the first embodiment.

When the refractory reinforcement architectural member 1 is looked from an outdoor side, or from the front face of an indoor side, i.e., from the direction perpendicular to the direction along with the glass surface, the thermally expansible refractory material 15 is located at the front face of the cavities of the vertical cabinets 21 and 22 and the horizontal cabinets 23 and 24 which surround outer peripheral of the center window glasses 25 and 25. The thermally expansible refractory material 15 is also located at the front face of the cavities of the vertical frame bodies 11 and 12 and the horizontal frame bodies 13 and 14 of the open frame body 10 supporting the plate materials 20 and 20, and all the thermally expansible refractory materials 15 are injected along with the surface of the window glass 25 to form the refractory surface.

Incidentally, the composition of the thermally expansible refractory material 15 is mentioned later.

The thermally expansible refractory material 15 to be used in the first embodiment is a material which forms a thermal expansion residue by expanding the volume when it is exposed to a high temperature at the time of the fire, etc., and the portions which are deformed or fallen out by heating the aluminum metals such as the respective frame bodies 11 to 14 and the respective cabinets 21 to 24, etc., at the fire are filled by the thermal expansion residue of the thermally expansible refractory material 15 to prevent from penetration of the flame.

Next, the method of refractory reinforcing the architectural member by injecting the thermally expansible refractory material 15 into the cavity is explained.

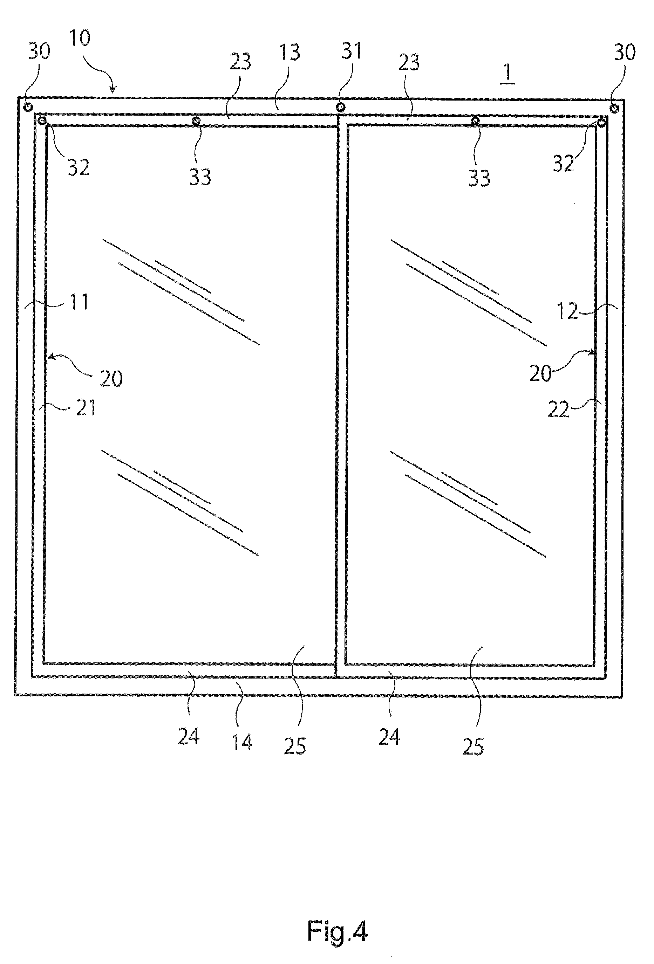

Fig. 4 is a schematic front view exemplifying the refractory reinforcement architectural member to be used in the first embodiment according to the present invention.

First, a plural number of holes 30 are opened at the upper portion of the vertical frame bodies 11 and 12 constituting the open frame body 10 by using a perforation means such as an electric drill, etc.

Similarly, a hole 31 is open to the horizontal frame body 13 constituting the open frame body 10.

Next, the thermally expansible refractory material 15 is injected thereinto from the holes 30 and 31. At the vertical frame bodies 11 and 12 and the horizontal frame body 13 constituting the open frame body 10, a plural number of holes 30 and 31 are each formed, so that when the thermally expansible refractory material 15 is injected, an air at the inside of the vertical frame bodies 11 and 12 and the horizontal frame body 13 constituting the open frame body 10 is discharged to the outside from the hole other than the holes to be used for the injection. According to this procedure, the thermally expansible refractory material 15 can be smoothly injected into the cavities at the inside of the vertical frame bodies 11 and 12 and the cavities at the inside of the horizontal frame body 13 constituting the open frame body 10.

In Fig. 4, the respective holes are provided at the front face of the refractory reinforcement architectural member 1 according to the first embodiment, but it may be optionally provided at the side face, the back face, the top face, etc., of the refractory reinforcement architectural member 1 to be used for the refractory reinforcement structure according to the first embodiment.

When the thermally expansible refractory material 15 is injected into the cavity at the inside of the open frame body 10 from the front face, an air at the inside of the open frame body 10 can be discharged from, other than the hole provided at the front face, at least one of the hole provided at the side face of the open frame body 10, the hole provided at the back face, and the hole provided at the top face.

A pipe is inserted into the hole provided at least one of the places of the front face, the side face, the back face and the top face of the open frame body 10, and the thermally expansible refractory material 15 can be injected into the inside of the open frame body 10 while reducing the pressure at the inside of the open frame body 10. In addition, from the hole provided at least one of the places of the front face, the side face, the back face and the top face of the open frame body 10, the thermally expansible refractory material 15 can be injected into the inside of the open frame body 10 by applying a pressure by an injection means under pressure equipped with a piston and a cylinder, etc.

Incidentally, for convenience of explanation, in Fig. 4, the respective holes are provided at the front face of the refractory reinforcement architectural member 1 to be used for the refractory reinforcement structure according to the first embodiment, but when a design is considered, the holes are preferably provided at the side face, the top face, etc., of the refractory reinforcement architectural member 1.

A position, a shape, a size, etc., of a plural number of the holes 30 and 31 to be formed at the vertical frame bodies 11 and 12 and the horizontal frame body 13 constituting the open frame body 10 may be optionally selected by considering the efficiency of injecting the thermally expansible refractory material 15.

Also, when the cavity at the inside of the horizontal frame body 14 constituting the open frame body 10 is not connected to the cavity at the inside of the vertical frame bodies 11 and 12, a hole is optionally opened to the horizontal frame body 14 constituting the open frame body 10 by using a perforation means such as an electric drill, etc., and the thermally expansible refractory material 15 can be injected thereinto from the hole.

Similarly, a plural number of the holes 32 and 33 are opened to the left-and-right vertical cabinets 21 and 22 and the horizontal cabinets 23 and 24, respectively, which becomes the frame body of the plate material 20 by using a perforation means such as an electric drill, etc. From the holes, the thermally expansible refractory material 15 can be injected into the cavity at the inside of the left-and-right vertical cabinets 21 and 22 and the cavity at the inside of the horizontal cabinets 23 and 24.

After the constructing operation, a closing tool such as a resin cap, a screw made of a metal, etc., may be provided at the holes 30 to 33, if necessary.

The thermally expansible refractory materials 15 injected into the inside of the respective cavities of the vertical frame bodies 11 and 12 and the horizontal frame bodies 13 and 14 constituting the open frame body 10, and the left-and-right vertical cabinets 21 and 22 and the horizontal cabinets 23 and 24 which become a frame body of the plate material 20, wherein the curing reaction of which proceeds with a lapse of time, lose fluidity at the inside of the cavities.

Therefore, the thermally expansible refractory materials 15 injected into the inside of the respective cavities can be retained in the vertical frame bodies 11 and 12 and the horizontal frame bodies 13 and 14 constituting the open frame body 10, and the left-and-right vertical cabinets 21 and 22 and the horizontal cabinets 23 and 24 which become a frame body of the plate material 20, without leaking out therefrom.

Also, when a foam body containing bubbles is used as the thermally expansible refractory material 15, heat insulating property of the refractory reinforcement architectural member 1 to be used in the refractory reinforcement structure according to the first embodiment can be heightened.

The refractory reinforcement architectural member 1 to be used in the refractory reinforcement structure according to the first embodiment can be obtained by injecting the thermally expansible refractory material 15 into the cavity at the inside of the open frame body 10, etc.

Therefore, refractory reinforcement can be applied without removing two sheets of plate materials 20 and 20, etc., from the open frame body 10, so that fire resistance can be easily heightened.

By providing the thus obtained refractory reinforcement architectural member 1 to the opening of an outer wall, etc., of the building, the refractory reinforcement structure according to the first embodiment can be obtained.

Next, the second embodiment of the present invention is explained.

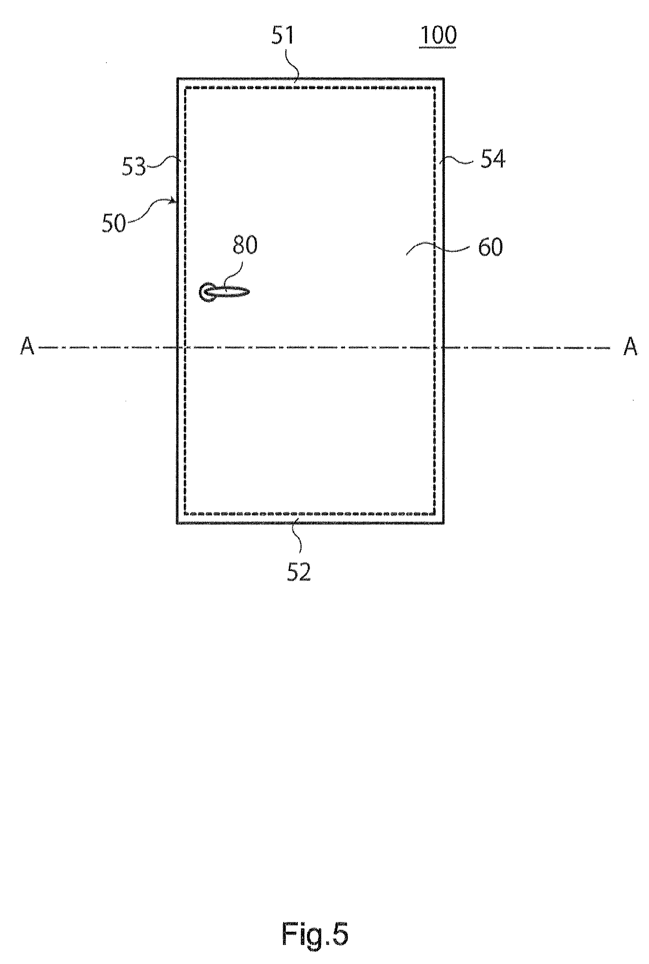

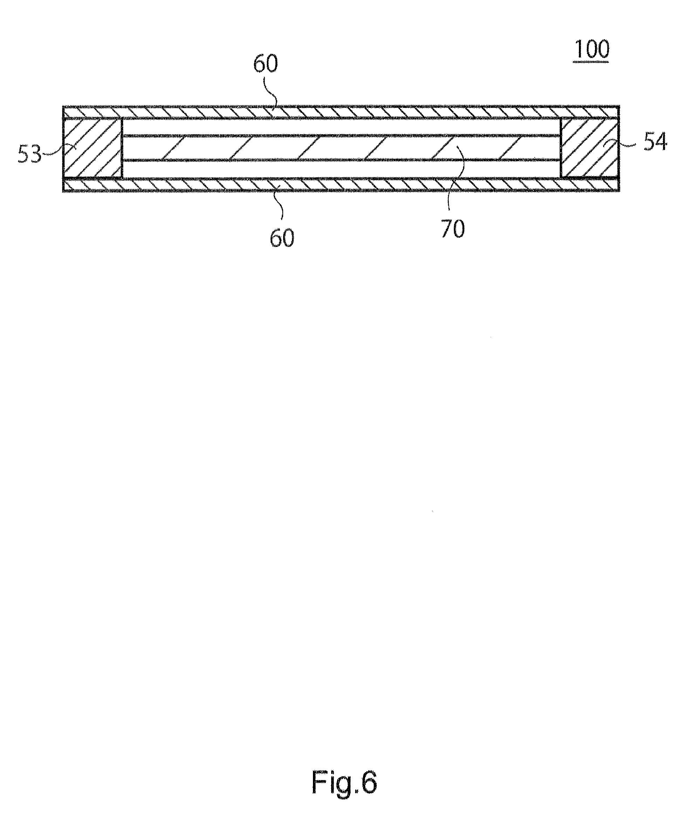

Fig. 5 is a schematic front view exemplifying the refractory reinforcement architectural member to be used in the refractory reinforcement structure according to the second embodiment of the present invention. Also, Fig. 6 is a principal part cross sectional view of the refractory reinforcement architectural member along with the line A-A of Fig. 5.

As an example of the refractory reinforcement architectural member 1, an opening/closing door is exemplified in Fig. 5 and Fig. 6.

In Figs. 5 and 6, the refractory reinforcement architectural member 100 is a material to be fixed capable of opening/closing to a rectangular opening formed at exit and entrance of the structures such as a residence, etc., by a movable fixing means such as a hinge, etc., and has an opening frame body 50 as a peripheral frame material, and two sheets of plate materials 60 and 60 covering the opening frame body 50 from both surfaces.

By injecting thermally expansible refractory material 15 into the inside of the space formed between the two sheets of the plate materials 60 and 60 which face each other, the refractory reinforcement architectural member 100 to be used for the refractory reinforcement structure according to the second embodiment can be obtained.

The opening frame body 50 is constituted by the upper and lower horizontal frame bodies 51 and 52 and the left-and-right vertical frame bodies 53 and 54. And the two sheets of the plate materials 60 and 60 are to occlude the opening frame body 50.

Also, between the two sheets of the plate materials 60 and 60, a heat insulating material 70 comprising an inorganic fiber such as glass wool, etc., as a heat insulating material, and an aluminum foil covering the inorganic fiber is provided.

It is preferred to provide a net-shaped sheet between the two sheets of the plate materials 60 and 60. By providing the net-shaped sheet, a thermally expansible refractory material 15 is injected into the two sheets of plate materials 60 and 60, and when the thermally expansible refractory material 15 has lost fluidity at the inside of the space between the two sheets of the plate materials 60 and 60, the thermally expansible refractory material 15 gets tangled with the net-shaped sheet. By getting the thermally expansible refractory material 15 tangled with the net-shaped sheet, the thermally expansible refractory material 15 can be stably provided at the inside of the space between the two sheets of the plate materials 60 and 60.

It is preferred that the whole surface at the inside of the plate materials 60 and 60 is covered by the net-shaped sheet.

Specific examples of the net-shaped sheet may be mentioned, for example, a material which is knitted to a netlike by using a metal wire, a metal fiber, an organic fiber, an inorganic fiber, etc. The metal wire may be mentioned, for example, an iron wire, a steel wire, a stainless wire, a copper wire, and an alloy wire containing two or more metals, etc.

The metal fiber refers to a material in which fine metal wires are intertwined, and may be mentioned, for example, iron fiber, steel fiber, stainless fiber, copper fiber, alloy fiber containing two or more metals, etc.

The organic fiber may be mentioned, for example, polyester fiber, polyamide fiber, polyvinyl alcohol fiber, acrylic fiber, polyolefin fiber, polyurethane fiber, etc.

The inorganic fiber may be mentioned, for example, rockwool, ceramic wool, silica alumina fiber, alumina fiber, silica fiber, zirconia fiber, etc.

The raw material to be used for the net-shaped sheet may be used with a kind or two or more kinds in combination.

Also, the net-shaped sheet may be used with a kind or two or more kinds in combination.

Use of the net-shaped sheet is not limited to the second embodiment of the present invention alone, and the net-shaped sheet can be also used in the other embodiments of the present invention.

The refractory reinforcement architectural member 100 is constituted by wooden frame bodies 51 to 54 as horizontal and vertical frame materials, and wooden plate materials 60 and 60 in combination.

Also, the refractory reinforcement architectural member 100 is provided by a doorknob 80 as an opening/closing means. The structure of the opening/closing means is well known, and can be used by optionally selecting the commercially available product.

The raw materials constituting the refractory reinforcement architectural member 100 to be used for the refractory reinforcement structure according to the second embodiment can be optionally selected depending on the purposes or uses similarly in the case of the first embodiment.

In the refractory reinforcement architectural member 100 to be used in the second embodiment, the thermally expansible refractory material 15 is injected into the space formed between the heat insulating material 70 and the wooden plate material 60 among the spaces formed between the wooden plate materials 60 and 60 to each other constituting the opening frame body 50.

After the thermally expansible refractory material 15 is injected, the thermally expansible refractory material 15 loses its fluidity at inside the space.

The thermally expansible refractory material 15 to be used in the second embodiment is a material which forms a thermal expansion residue when it is exposed to high temperature such as at the time of fire, etc., by volume expansion, and when the wooden plate material 60 constituting the opening frame body 50, and the left-and-right horizontal frame bodies 51 and 52 and the upper and lower vertical frame bodies 53 and 54 of the opening frame body 50 are heated at the time of a fire, carbonization of the contact surface of the wooden plate material 60, and the left-and-right horizontal frame bodies 51 and 52, and the upper and lower vertical frame bodies 53 and 54 of the opening frame body 50 with the thermal expansion residue by the thermally expansible refractory material 15 is suppressed, whereby refractory performance can be assured.

Next, the refractory reinforcement method of an architectural member by injecting the thermally expansible refractory material 15 into a space is explained.

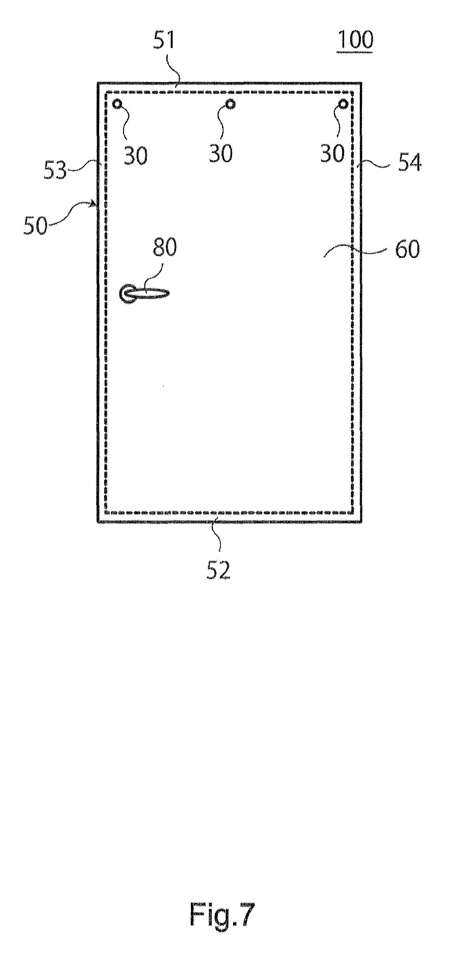

Fig. 7 is a schematic front view exemplifying a refractory reinforcement architectural member to be used in the second embodiment according to the present invention.

First, a plural number of holes 30 are opened at an upper portion of a wooden plate material 60 by using a perforation means such as an electric drill, etc.

Next, a thermally expansible refractory material is injected thereinto from the hole 30. Since a plural number of the holes 30 are each formed at the wooden plate material 60, when the thermally expansible refractory material is injected thereinto, an air at the inside of the opening frame body 50 and the wooden plate material 60 constituting the opening frame body 50 is discharged to the outside from the hole which is different from the hole to be injected. According to this procedure, the thermally expansible refractory material can be smoothly injected into the space at the inside of the wooden plate material 60 and the heat insulating material 70 constituting the refractory reinforcement architectural member 100.

A position, a shape, a size, etc., of a plural number of the holes 30 and 31 to be formed at the wooden plate material 60 may be optionally selected by considering the efficiency of injecting the thermally expansible refractory material and determined.

Incidentally, for convenience of explanation, in Fig. 7, the respective holes are provided at the front face of the refractory reinforcement architectural member 100 according to the second embodiment, but a design is considered, the holes are preferably provided at the side face, the top face, etc., of the refractory reinforcement architectural member 1.

After the constructing operation, a closing tool such as a resin cap, a screw made of a metal, etc., may be provided at the hole 30, if necessary.

The thermally expansible refractory material 15 injected into the inside of the space of the wooden plate material 60 and the heat insulating material 70 loses fluidity at the inside of the space by the progress of the curing reaction with a lapse of time.

Therefore, the thermally expansible refractory material 15 injected into the inside of the space can be retained at the inside without leaking out from the opening frame material 50 and the wooden plate material 60.

Also, a foam body containing bubbles is used as the thermally expansible refractory material 15, heat insulating property of the refractory reinforcement architectural member 100 to be used for the refractory reinforcement structure according to the second embodiment can be heightened.

With regard to the refractory reinforcement architectural member 100 to be used for the refractory reinforcement structure according to the second embodiment, it can be obtained by injecting the thermally expansible refractory material 15 into the space at the inside of the wooden plate materials 60 and 60, etc.

By providing the thus obtained refractory reinforcement architectural member 100 to an opening provided at the partition partitioning the room and room, the refractory reinforcement structure according to the second embodiment can be obtained.

The refractory reinforcement structure according to the second embodiment can practice the refractory reinforcement without removing the opening/closing door from an opening provided at the partition of the structures such as a residence, etc., so that it can easily heighten fire resistance.

Next, the third embodiment of the present invention is explained.

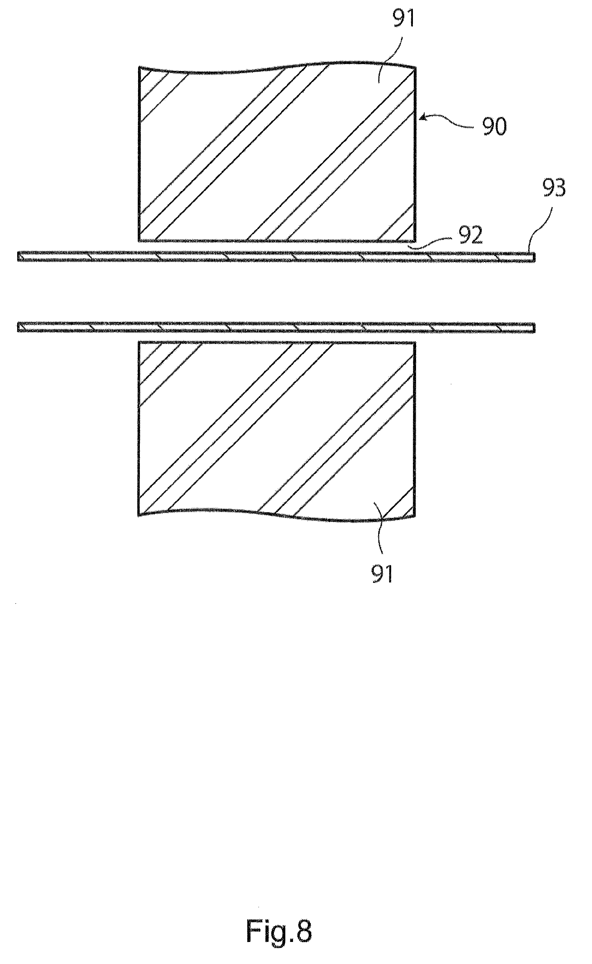

Fig. 8 is a schematic cross sectional view for explaining the refractory reinforcement structure according to the third embodiment of the present invention.

It contains at least a partition 90 provided at a compartment of the structure and a pipe 93 inserted into a through hole 92 of the partition 90, and a thermally expansible refractory material 15 is injected into the gap between an inner surface of the through hole 92 of the partition 90 and an outer surface of the pipe 93 to form a refractory reinforcement structure 300.

In the third embodiment, as the partition 90 provided at the compartment of the structure, a concrete wall 91 of a building is used.

A circular through hole 92 is provided at the concrete wall 91. A shape of the through hole 92 is not limited to circle and may be optionally selected.

As shown in Fig. 8, the pipe 93 is inserted into the through hole 92. The pipe 93 is formed by a cylindrical tube of a synthetic resin such as a polyvinyl chloride, etc.

Specific examples of the partition to be used in the present invention may be mentioned, for example, concrete slab, an RC wall, an ALC wall, an RW wall, a brick, a hollow wall, etc. The hollow wall to be used in the present invention may be any material having a space at the inside thereof, and is not particularly limited, for example, those containing a pillar member and a heat resistant panel, etc., may be mentioned. More specifically, there may be mentioned, for example, a structure in which one or more heat resistant panels, etc., are fixed to at least one of a stud such as timber yoke, metal frame, a pillar made from a reinforced concrete, an iron frame comprising a steel material, etc., from both sides thereof, etc.

The heat resistant panel may be mentioned, for example, a cement series panel, an inorganic ceramic series panel, etc.

The cement series panel may be mentioned, for example, a hard wooden piece cement slub, an inorganic fiber-containing scaffold board, an autoclaved lightweight concrete plate, a mortar plate, a precast concrete plate, etc.

The inorganic ceramic series panel may be mentioned, for example, a gypsum board, a calcium silicate plate, a calcium carbonate plate, a mineral wool plate, a ceramics series panel, etc.

Here, the gypsum board may be specifically mentioned a material in which a lightweight material such as sawduct and perlite, etc., is mixed with calcined plaster, and the mixture is molded by pasting cardboards at the both surfaces, for example, normal gypsum boards (based on JIS A6901: GB-R), decorated gypsum boards (based on JIS A6911: GB-D), waterproof gypsum boards (based on JIS A6912: GB-S), reinforced gypsum boards (based on JIS A6913: GB-F), gypsum acoustic boards (based on JIS A6301: GB-P), etc.

The heat resistant panel may be used with a kind or two or more kinds.

The pipe to be used in the present invention may be mentioned, for example, a pipe for liquid transfer such as a refrigerant pipe, a water pipe, a sewer pipe, a feeding/draining pipe, a fuel transfer pipe, a hydraulic piping, etc., a pipe for gas transfer such as a gas pipe, a pipe for transfer a medium for heating and cooling, an air pipe, etc., a cable such as a wire and cable, an optical fiber cable, a cable for shipping, etc., and a sleeve for inserting these pipes for liquid transfer, pipes for gas transfer, cables, etc., thereinto, etc.

Among these, in the viewpoint of workability, a pipe for liquid transfer such as a refrigerant pipe, a heat medium pipe, a water pipe, a sewer pipe, a feeding/draining pipe, a fuel transfer pipe, a hydraulic piping, etc., is preferred, and a refrigerant pipe or a heat medium pipe is more preferred.

The pipes may be used with a kind or two or more kinds of a pipe for liquid transfer, a pipe for gas transfer, a cable, a sleeve, etc.

A shape of the pipe is not particularly limited, and may be mentioned, for example, a shape in which a cross sectional shape in the vertical direction to the longitudinal direction of the pipes of a polygon such as a triangle, a rectangle, etc., a shape in which lengths of the adjacent sides are different such as a rectangular, etc., a shape in which adjacent interior angles are different such as a parallelogram, etc., an elliptical shape, a round shape, etc. Among these, a cross sectional shape of a round shape, a rectangle shape, etc., is preferred since these are excellent in workability.

A size of the cross sectional shape of the pipe is, based on the length of the side which is the longest among the distances from the center of gravity of the cross sectional shape to the contour line of the cross sectional shape, generally in the range of 1 to 1000 mm, preferably in the range of 5 to 750 mm.

When the pipes are a pipe for liquid transfer, a pipe for gas transfer, a cable, etc., it is generally in the range of 0.5 mm to 100 mm, preferably in the range of 1 mm to 50 mm.

Also, when the pipes are a sleeve, it is generally in the range of 10 to 1000 mm, preferably in the range of 50 to 750 mm.

As for the raw material of the pipes, it is not particularly limited so long as it is a material containing a synthetic resin member, and may be mentioned, for example, a material comprising a kind or two or more kinds of a metal material, an inorganic material, an organic material, etc.

The metal material may be mentioned, for example, iron, steel, stainless, copper, an alloy containing two or more metals, etc.

Also, the inorganic material may be mentioned, for example, glass, ceramic, rockwool, ceramic wool, silica-alumina fiber, alumina fiber, silica fiber, zirconia fiber, ceramic blanket, etc.

Further, the organic material may be mentioned, for example, a synthetic resin such as a polyvinyl chloride resin, an ABS resin, a vinylidene fluoride resin, a polyethylene resin, a polypropylene resin, a polyethylene terephthalate resin, etc.

The raw material(s) may be used with a kind or two or more kinds.

The pipes to be used in the present invention is a kind or more of the metal material tubes, the inorganic material tubes and the organic material tubes, etc., and may be used as a laminated tube using two or more kinds of the metal material tube, the inorganic material tubes and the organic material tubes, etc., as an inner cylinder or an outer cylinder.

The pipe body to be used for the pipes is preferably a metal material pipe, an organic material pipe, etc., in the point of handling property, more specifically a material containing a steel pipe, a copper pipe, a synthetic resin pipe, etc., is further preferred.

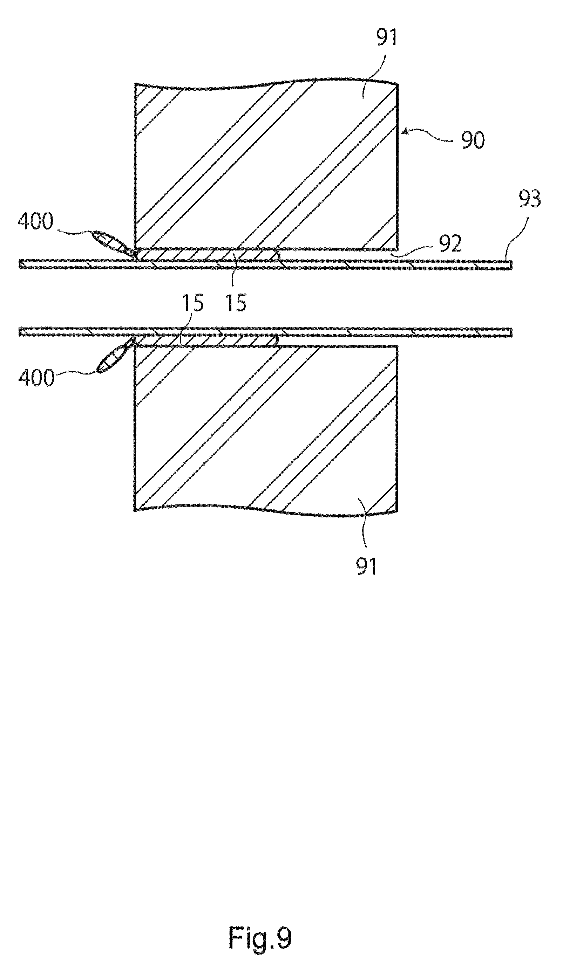

Fig. 9 is a schematic cross sectional view for explaining the steps of constructing the refractory reinforcement structure according to the third embodiment.

As shown in Fig. 9, by using a bag 400, a thermally expansible refractory material 15 is injected into the gap between an inner surface of a through hole 92 of a partition 90 and an outer surface of a pipe 93, a refractory reinforcement structure 300 can be formed.

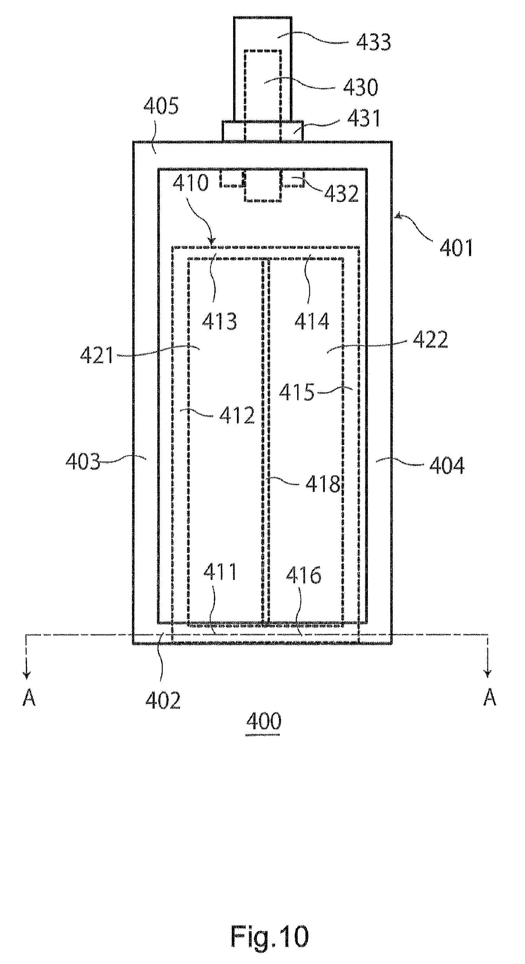

Fig. 10 is a schematic front view for explaining a bag 400 used at the time of constructing the refractory reinforcement structure according to the third embodiment.

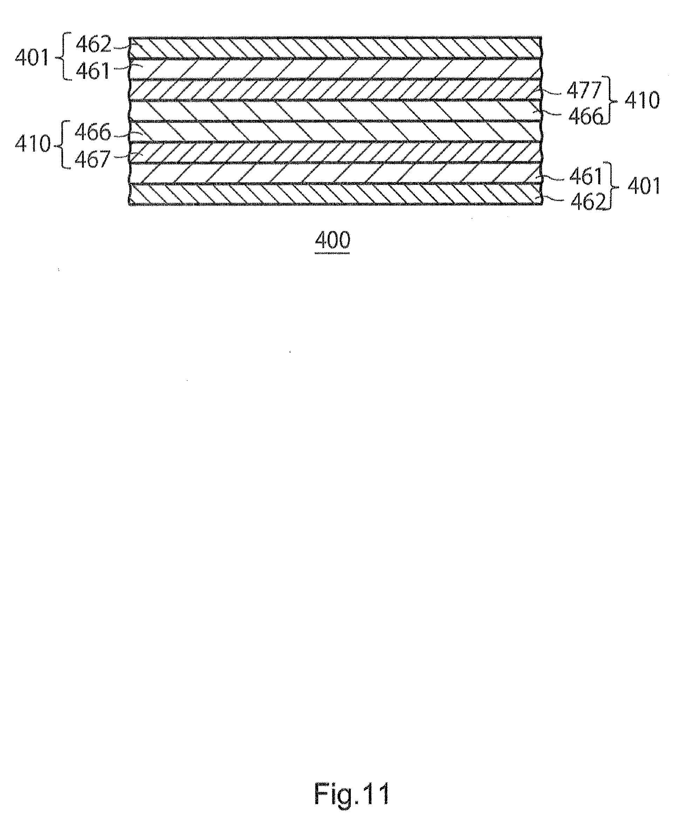

Fig. 11 shows a cross section of the bag 400 shown in Fig. 10 cut at the dot and dash line A-A portion.

The bag 400 used in the third embodiment has a first component storage part (a-1) and a second component storage part (a-2) at the inside thereof as a bag portion.

The first component storage part (a-1) and the second component storage part (a-2) are shown by the reference numerals 421 and 422 in Fig. 9, respectively. The first component storage part (a-1) and the second component storage part (a-2) are each formed by an aluminum laminated polypropylene 410 in which an aluminum foil 466 and polypropylenes 467 and 477 are laminated.

Two sheets of the same shaped aluminum laminated polypropylenes 410 and 410 are superimposed by facing aluminum foils 466 inside to each other, peripheral edge portions 411 to 416 and the center portion 418 of the aluminum laminated polypropylene 410 are heat sealed.

In the first component storage part (a-1) and the second component storage part (a-2), Component A and Component B described in Example 1 of Table 1 are contained, respectively.

In the bag 400, as compared with peripheral edge portions 402 to 405 of the aluminum laminated nonwoven fabrics 401 and 401 in which an aluminum foil 461 and a nonwoven fabric 462 are laminated and peripheral edge portions 411 to 416 of the first component storage part (a-1) and the second component storage part (a-2), the center portion 418 of the aluminum laminated polypropylene 410 is weakly adhered.

Therefore, when an external force is applied to the first component storage part (a-1) and the second component storage part (a-2) by rubbing the bag with hands or stepping the same with the foot, etc., the adhered portion at the center portion of the aluminum laminated polypropylenes 410 and 410 alone is detached to connect the adjacent first component storage part (a-1) and the second component storage part (a-2) to each other at the inside thereof.

At this time, the peripheral edge portions 402 to 405 of the aluminum laminated nonwoven fabrics 401 and 401 and the peripheral edge portions 411 to 416 of the first component storage part (a-1) and the second component storage part (a-2) are heat sealed to each other with an adhesive force which cannot be opened by an external force with such an extent of rubbing the bag with hands or stepping the same with the foot, or so, before expansion of expansible components (A).

Next, when expansion of the expansible components (A) is proceed with a certain degree or more at the inside of the bag 400, at least one of the peripheral edge portions 413 and 414 of the first component storage part (a-1) and the second component storage part (a-2) is detached to be connected the first component storage part (a-1), the second component storage part (a-2) and the inside of the bag 400 to each other.

When a pressure is applied to the inside of the bag 400, the adhered portions are detached in the order of a narrower adhesion width. By utilizing this relation, the adhered portions provided at the inside of the bag 400 can be detached with an optional order.

By applying an external force to the bag 400, among the expansible components (A), a polyether polyol contained in the first component storage part (a-1) and an isocyanate compound contained in the second component storage part (a-2) are mixed to start the reaction, and a minute amount of water contained in the polyether polyol acts as a foaming agent to form a polyurethane resin foam at the inside of the bag 400.

In the polyurethane resin foam, a thermally expansive graphite as a thermally expansible component (B), calcium carbonate as a filler, and ammonium polyphosphate are contained.

To the bag 400 is also provided a cylinder member 430 which passes through an inside and an outside of the bag 400. In the case of the third embodiment, the cylinder member 430 is a cylindrical shape comprising a synthetic resin such as a polypropylene, etc.

To the cylinder member 430 are provided fixed portions 431 and 432, and the cylinder member 430 can be fixed to the bag 400.

To the cylinder member 430 is also provided a lid material 433. At the outer peripheral of the cylinder member 430, a screw thread is formed. At the inside of the lid material 433 is also formed a thread groove, and it constitutes the structure that the lid material 433 can be fixed to the cylinder member 430 under sealing.

The structure of the lid material 433 which occludes an opening of the cylinder member 430 is not particularly limited so long as it can occlude the opening of the cylinder member 430.

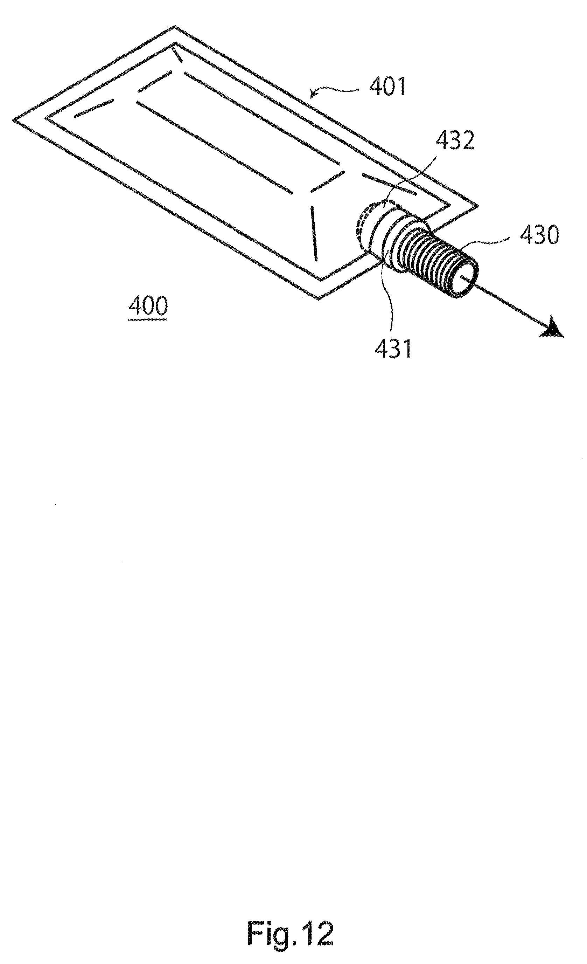

Fig. 12 is a schematic perspective view for explaining the state of releasing the polyurethane resin foam from the inside of the bag 400 to be used in the third embodiment.

First, the lid material 433 of the bag 400 is removed.

Next, when an external force is applied to the bag 400 by a means such as rubbing with the hands, etc., a polyurethane resin foam is formed at the inside of the bag 400.

The formed polyurethane resin foam is discharged from the top of the cylinder member 430 of the bag 400 to the outside.

As shown in the previous Fig. 9, by turning the top of the cylinder member 430 of the bag 400 to the gap between an inner surface of the through hole 92 of the partition 90 and an outer surface of the pipe 93, the polyurethane resin foam can be injected into the gap between the inner surface of the through hole 92 of the partition 90 and the outer surface of the pipe 93.

By injecting the polyurethane resin foam thereinto, the refractory reinforcement structure according to the third embodiment can be obtained.

In the case of the third embodiment, as the specific example of the thermally expansible refractory material 15, explanation is made by using a polyurethane resin foam as an example, and as the thermally expansible refractory material 15, those mentioned later can be optionally selected and used.

Next, a modified example of the bag 400 used in the third embodiment is explained.

The bag 400 used in the third embodiment was provided by the cylinder member 430. The bag 450 which is a modified example has a projected portion 440 protruded to the outside in place of the cylinder member 430. Other constitutions of the bag 450 are the same as those of the bag 400.

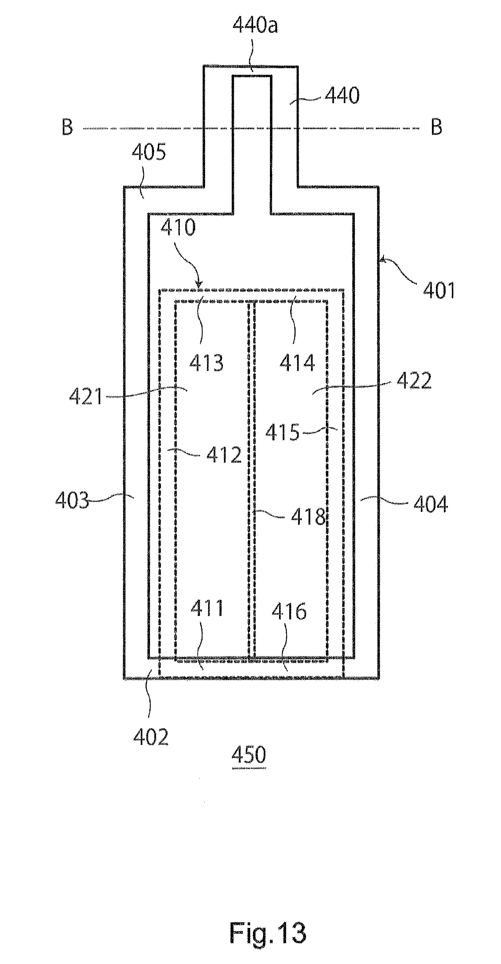

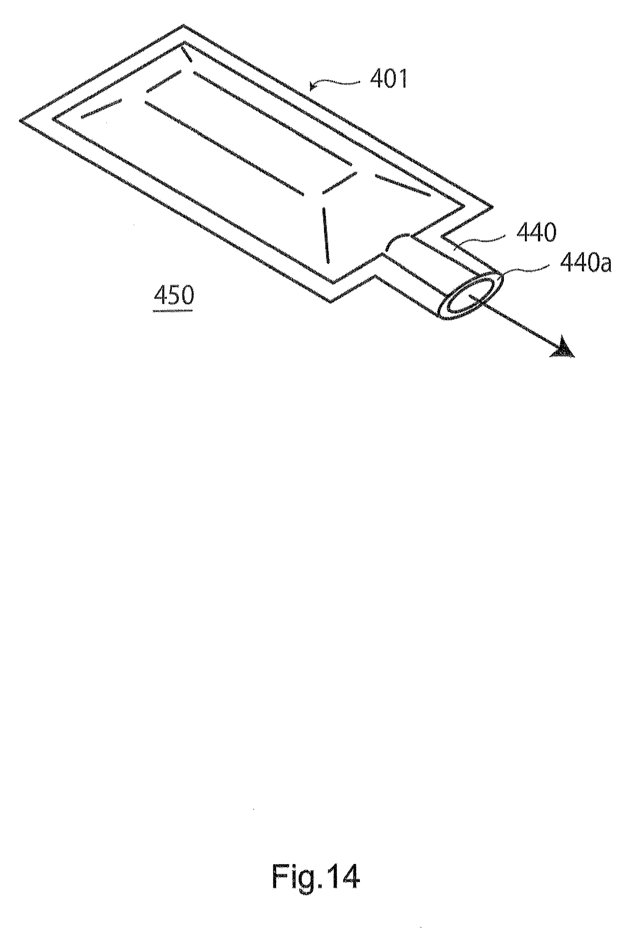

Fig. 13 and Fig. 14 are schematic perspective views for explaining the bag 450 as a modified example.

The periphery of the projected portion 440 is heat sealed with the same width to that of the peripheral edge portion 405 of the aluminum laminated nonwoven fabrics 401 and 401.

Also, the tip division 440a of the projected portion 440 is heat sealed with a narrow width. Therefore, when the polyurethane resin foam is expanded at the inside of the bag 450 to become an inner pressure of the bag 450 at a certain value or more, the tip division 440a which is an adhered portion firstly heat sealed in the peripheries of the bag 450 is detached. As a result, the polyurethane resin foam can be released from the tip division 440a of the projected portion 440 of the bag 450 to the outside.

Incidentally, in the polyurethane resin foam, thermally expansive graphite, calcium carbonate as a filler, and ammonium polyphosphate are contained.

By using the bag 450 in place of using the bag 400 used in the third embodiment, and injecting the polyurethane resin foam into the gap between the pipe 93 inserted into the through hole 92 of the partition 90 and the through hole 92, the refractory reinforcement structure which is similar to the case of the third embodiment can be obtained.

Incidentally, the bag 450 may be used by cutting the projected portion 440 of bag 450 along with the dot and dash line B-B shown in Fig. 13.

First, the projected portion 440 of the bag 450 is cut along with the dot and dash line B-B.

The bag 450 cut the projected portion 440 is then started to expansion of the bag 450 by a means such as rubbing with the hands, etc.

Next, an opening of the cut projected portion 440 of the bag 450 is turned to the gap between the pipe 93 inserted into the through hole 92 of the partition 90 and the through hole 92 in the same manner as in Fig. 9, the polyurethane resin foam is injected into the gap between the pipe 93 inserted into the through hole 92 of the partition 90 and the through hole 92 from the bag 450.

According to the above procedure, the refractory reinforcement structure similar to the case shown in Fig. 9 can be also obtained.

Next, the fourth embodiment of the present invention is explained.

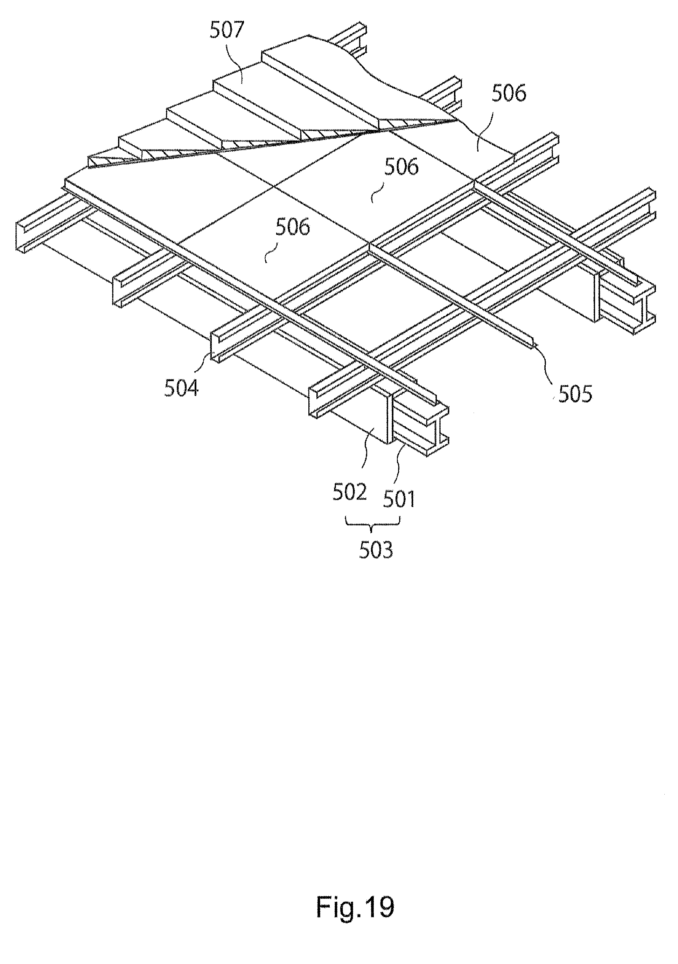

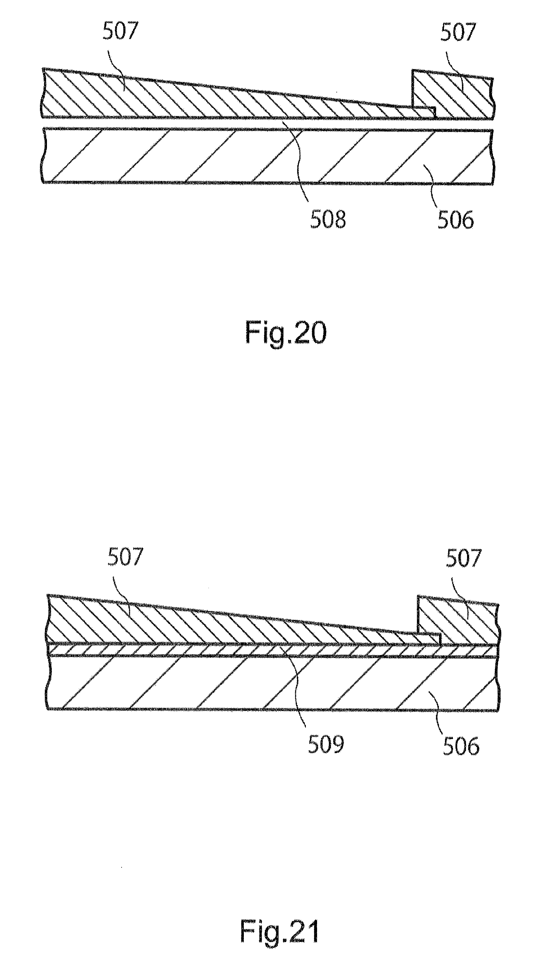

Fig. 19 is a schematic perspective view for explaining the refractory reinforcement structure according to the fourth embodiment of the present invention. Also, Fig. 20 and Fig. 21 are principal part cross sectional views for explaining the gap between a roof member and a heat resistant panel.

In the case of the fourth embodiment, as an example of the refractory reinforcement architectural member, a roof is exemplified in Fig. 19 to Fig. 21.

Fig. 19 is a drawing showing an appearance looked down a roof of structures such as a residence, etc., from above.

As shown in Fig. 19, supporting structure members 503 in which the periphery of the steel materials 501 having a cross section of H shape have been covered by inorganic heat resistant panels 502 are provided at the lowermost step.

Also, steel frames 504 are so provided on the supporting structure members 503 as to intersect perpendicularly to the supporting structure members 503 and at intervals.

T-shaped joint fillers 505 comprising a steel material are so provided on the steel frames 504 as to intersect perpendicularly to the steel frames 504 and at intervals.

Further, heat resistant panels 506 are provided at the rectangular space partitioned by the steel frames 504 and the T-shaped joint fillers 505.

On the heat resistant panels 506, roof members 507 are provided.

There are gaps 508 between the heat resistant panels 506 and the roof members 507.

Into the gap 508 is injected the thermally expansible refractory material 509 and to lose fluidity, the refractory reinforcement structure according to the fourth embodiment of the present invention shown in Fig. 21 can be obtained.

In the case of the conventional roof, to improve fire resistance of the roof afterward, there is a problem that construction is complicated that the roof members 507 are removed from the roof and then a refractory material is provided, etc.

To the contrary, in the case of the refractory reinforcement structure according to the fourth embodiment of the present invention, it can be obtained by injecting the thermally expansible refractory material 509 into the gap between the plate material and the plate material provided to the roof, so that refractory reinforcement can be simply and easily carried out.

Next, the fifth embodiment of the present invention is explained.

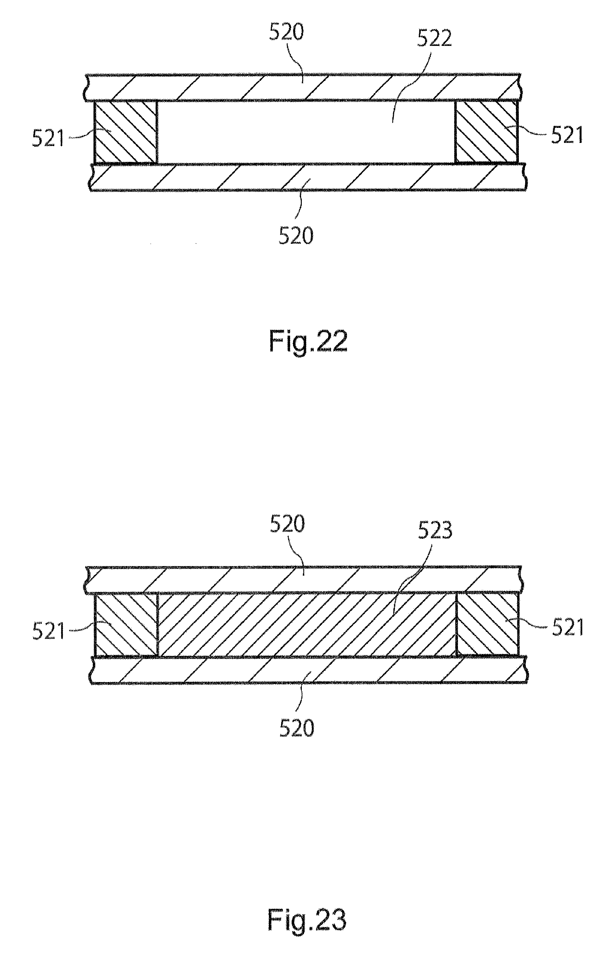

Fig. 22 and Fig. 23 are schematic cross sectional views for explaining the refractory reinforcement structure according to the fifth embodiment of the present invention.

In the case of the fifth embodiment, as an example of the refractory reinforcement architectural member, a partitioning provided at the inside of the room, etc., is exemplified as a wall in Fig. 22 to Fig. 23.

As shown in Fig. 22, the wood plates 520 and 520 forming a compartment of a room is fixed to a pillar made of wood 521 in the vertical direction to the ground. There is a gap 522 between the wood plates 520 and 520.

Into the gap 522 is injected the thermally expansible refractory material 523 and to lose fluidity, the refractory reinforcement structure according to the fifth embodiment of the present invention shown in Fig. 23 can be obtained.

In the case of the conventional wall such as the partitioning, to improve fire resistance of the wall afterward, there is a problem that construction is complicated that the wood plates 520 are removed from the wall and then a refractory material is provided, etc.

To the contrary, in the case of the refractory reinforcement structure according to the fifth embodiment of the present invention, it can be obtained by injecting the thermally expansible refractory material 523 into the gap between the plate material and the plate material provided to the wall, so that refractory reinforcement can be simply and easily carried out.

Next, the sixth embodiment of the present invention is explained.

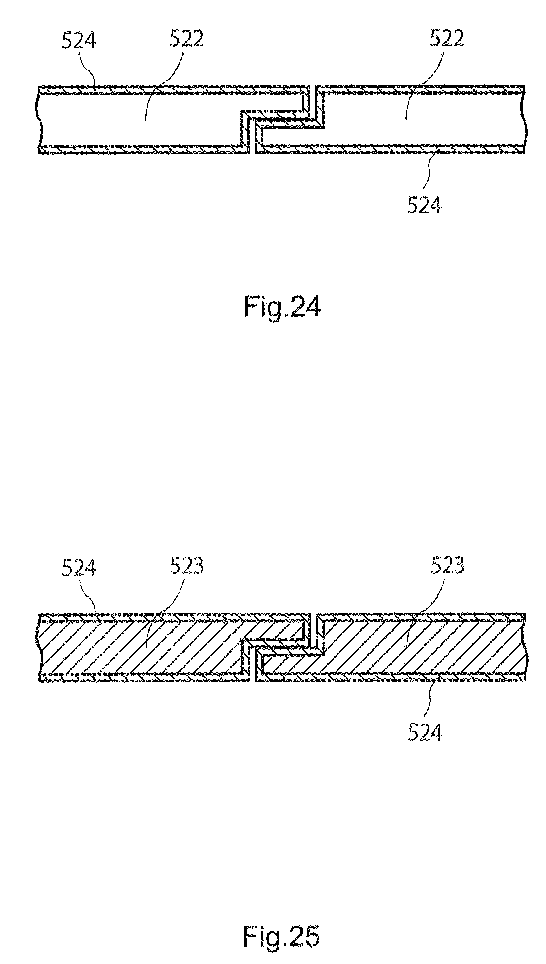

Fig. 24 and Fig. 25 are schematic cross sectional views for explaining the refractory reinforcement structure according to the sixth embodiment of the present invention.

In the case of the sixth embodiment, as an example of the refractory reinforcement architectural member, a steel plate provided at an outer wall, etc., is exemplified as a wall in Fig. 24 to Fig. 25.

As shown in Fig. 24, steel plates 524 and 524 forming an outer wall is provided in the vertical direction to the ground. There is a gap 522 between the steel plates 524 and 524.

Into the gap 522 is injected the thermally expansible refractory material 523 and to lose fluidity, the refractory reinforcement structure according to the fifth embodiment of the present invention shown in Fig. 25 can be obtained.

In the case of the conventional wall such as an outer wall, etc., it was difficult to improve fire resistance of the wall afterward.

To the contrary, in the case of the refractory reinforcement structure according to the sixth embodiment of the present invention, it can be obtained by injecting the thermally expansible refractory material 523 into the gap between the plate material and the plate material provided to the outer wall, so that refractory reinforcement can be simply and easily carried out.

Next, the seventh embodiment of the present invention is explained.

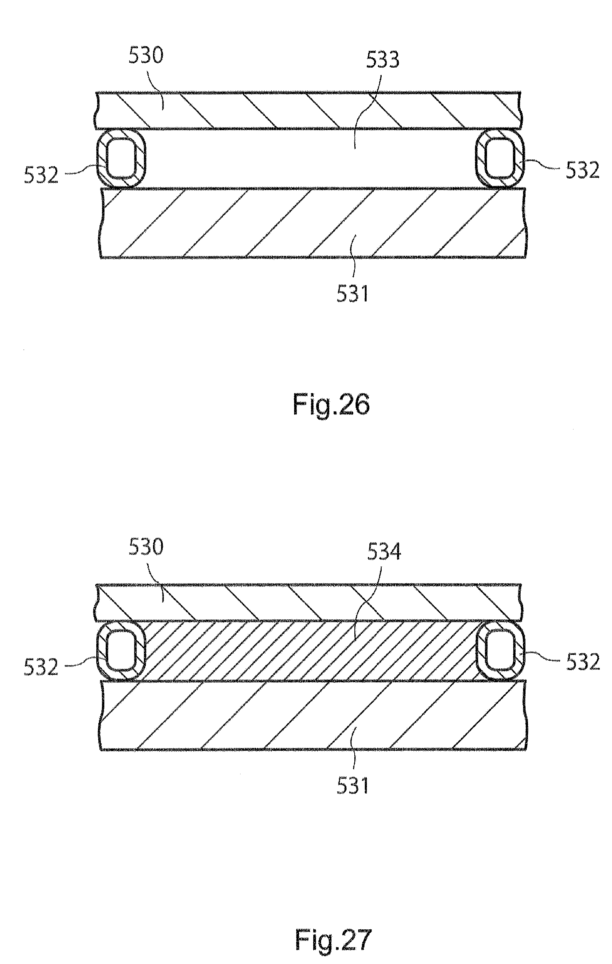

Fig. 26 and Fig. 27 are schematic cross sectional views for explaining the refractory reinforcement structures according to the seventh embodiment of the present invention.

In the case of the seventh embodiment, a floor is exemplified in Fig. 26 and Fig. 27 as an example of the refractory reinforcement architectural member.

As shown in Fig. 26, a wood plate 530 forming a floor portion of a room is fixed to metal studs 532 in the horizontal direction to the ground. Under the metal studs 532, an inorganic board 531 molded by a concrete, etc., is provided.

There is a gap 533 between the wood plate 530 and the inorganic board 531.

Into the gap 533 is injected a thermally expansible refractory material 534 to lose fluidity, the refractory reinforcement structure according to the sixth embodiment of the present invention can be obtained.

In the case of the conventional floor, to improve fire resistance of the floor afterward, there is a problem that construction is complicated that the wood plate 530 is removed from the floor and then a refractory material is provided, etc.

To the contrary, in the case of the refractory reinforcement structure according to the seventh embodiment of the present invention, it can be obtained by injecting the thermally expansible refractory material 534 into the gap between the plate material and the plate material provided to the floor, so that refractory reinforcement can be simply and easily carried out.

Next, the thermally expansible refractory material to be used in the present invention is explained.

The thermally expansible refractory material may be specifically mentioned, for example, a material comprising a resin composition containing a reaction curable resin component, a thermally expansible component, an inorganic filler, etc.

Among the respective components of the thermally expansible refractory material, the reaction curable resin component is firstly explained.

The reaction curable resin component is not specifically limited so long as it is a material, for example, in which a viscosity is increased with the progress of the reaction of constitutional components contained in the reaction curable resin component with a lapse of time, and it has fluidity at first and loses fluidity with a lapse of time.

When the specific examples of the reaction curable resin component is to be mentioned, there may be mentioned, for example, a urethane resin, an isocyanurate resin, an epoxy resin, a phenol resin, a urea resin, an unsaturated polyester resin, an alkyd resin, a melamine resin, a diallylphthalate resin, a silicone resin, etc.

The urethane resin may be mentioned, for example, those containing a polyisocyanate compound as a main agent, a polyol compound as a curing agent, and a catalyst, etc. The polyisocyanate compound which is a main agent of the urethane resin may be mentioned, for example, an aromatic polyisocyanate, an alicyclic polyisocyanate and an aliphatic polyisocyanate, etc.

The aromatic polyisocyanate may be mentioned, for example, phenylene diisocyanate, tolylene diisocyanate, xylylene diisocyanate, diphenylmethane diisocyanate, dimethyldiphenylmethane diisocyanate, triphenylmethane triisocyanate, naphthalene diisocyanate, polymethylene polyphenyl polyisocyanate, etc.

The alicyclic polyisocyanate may be mentioned, for example, cyclohexylene diisocyanate, methylcyclohexylene diisocyanate, isophorone diisocyanate, dicyclohexylmethane diisocyanate, dimethyldicyclohexylmethane diisocyanate, etc.

The aliphatic polyisocyanate may be mentioned, for example, methylene diisocyanate, ethylene diisocyanate, propylene diisocyanate, tetraethylene diisocyanate, hexamethylene diisocyanate, etc.

The polyisocyanate compound may be used with a kind or two or more kinds.

A main agent of the urethane resin is preferably diphenylmethane diisocyanate, etc., by the reason of easily used and easily obtained, etc.

The polyol compound which is a curing agent of the urethane resin may be mentioned, for example, an aromatic polyol, an alicyclic polyol, an aliphatic polyol, a polyester series polyol, a polymer polyol, etc.

The aromatic polyol may be mentioned, for example, bisphenol A, bisphenol F, phenol novolac, cresol novolac, etc. The alicyclic polyol may be mentioned, for example, cyclohexane diol, methylcyclohexane diol, isophorone diol, dicyclohexylmethane diol, dimethyldicyclohexylmethane diol, etc.

The aliphatic polyol may be mentioned, for example, ethylene glycol, propylene glycol, butane diol, pentane diol, hexane diol, etc.

The polyester series polyol may be mentioned, for example, a polymer obtained by dehydration condensation of a polybasic acid and a polyvalent alcohol, a polymer obtained by ring-opening polymerization of a lactone such as e-caprolactone, a-methyl-e-caprolactone, etc., and a condensed material of hydroxycarboxylic acid and the above-mentioned polyvalent alcohol, etc.

Here, the polybasic acid may be specifically mentioned, for example, adipic acid, azelaic acid, sebacic acid, terephthalic acid, isophthalic acid, succinic acid, etc.

Also, the polyvalent alcohol may be specifically mentioned, for example, bisphenol A, ethylene glycol, 1,2-propylene glycol, 1,4-butane diol, diethylene glycol, 1,6-hexane glycol, neopentyl glycol, etc.

Further, the hydroxycarboxylic acid may be specifically mentioned, for example, castor oil, a reaction product of castor oil and ethylene glycol, etc.

The polymer polyol may be mentioned, for example, a polymer in which an ethylenically unsaturated compound such as acrylonitrile, styrene, methyl acrylate, methacrylate, etc., is graft polymerized with an aromatic polyol, an alicyclic polyol, an aliphatic polyol, a polyester series polyol, etc., a polybutadiene polyol, or a hydrogenation product thereof, etc.

The polyisocyanate compound which is a main agent of the urethane resin and the polyol compound which is a curing agent are preferably mixed so that a ratio (NCO/OH) of an active hydrogen group (OH) in the polyol compound and an active isocyanate group (NCO) in the polyisocyanate compound becomes 1.2 to 15 with an equivalent ratio, more preferably in the range of 1.2 to 12.

If the equivalent ratio is 1.2 or more, it can prevent from the viscosity of the urethane resin becoming too high, and if it is 15 or less, good adhesive strength can be maintained.

The catalyst of the urethane resin may be mentioned, for example, an amino series catalyst such as triethylamine, N-methylmorpholine, bis(2-dimethylaminoethyl) ether, N,N,N'N",N"-pentamethyldiethylenetriamine, N,N,N'-trimethylaminoethylethanolamine, bis(2-dimethylaminoethyl) ether, N-methyl,N'-dimethylaminoethylpiperazine, an imidazole compound in which a secondary amine functional group in the imidazole ring is replaced with a cyanoethyl group, etc.

Next, the isocyanurate resin may be mentioned, for example, a material in which, by using the polyurethane resin explained previously, isocyanate groups contained in the polyisocyanate compound which is a main agent of the polyurethane resin are reacted to trimerize, to promote formation of an isocyanurate ring, etc.

To promote formation of the isocyanurate ring, for example, an aromatic compound such as tris(dimethylaminomethyl)phenol, 2,4-bis(dimethylaminomethyl)phenol, 2,4,6-tris(dialkylaminoalkyl)hexahydro-S-triazine, etc., an alkali metal salt of a carboxylic acid such as potassium acetate, potassium 2-ethylhexanoate, potassium octylate, etc., a quaternary ammonium salt of a carboxylic acid, etc., may be used as a catalyst.

With regard to the main agent of the isocyanurate resin and the curing agent, these are the same as in the previously mentioned polyurethane resin.

Next, the epoxy resin may be mentioned, for example, a resin obtained by reacting a monomer having an epoxy group as a main agent with a curing agent, etc.

The monomer having an epoxy group may be mentioned, for example, as a bifunctional glycidyl ether type monomer, a polyethylene glycol type, a polypropylene glycol type, a neopentyl glycol type, a 1,6-hexane diol type, a trimethylolpropane type, propylene oxide-bisphenol A, a hydrogenated bisphenol A type, a bisphenol A type, a bisphenol F type monomer, etc.

Also, the glycidyl ester type monomer may be mentioned a hexahydrophthalic anhydride type, a tetrahydrophthalic anhydride type, a dimeric acid type and a p-oxybenzoic acid type monomer, etc.

Further, the polyfunctional glycidyl ether type monomer may be mentioned a phenol novolac type, an orthocresol type, a DPP novolac type, dicyclopentadiene and a phenol type monomer, etc.

These may be used with a kind or two or more kinds in combination.

The curing agent may be mentioned, for example, a polyaddition type curing agent and a catalyst type curing agent, etc.

The polyaddition type curing agent may be mentioned, for example, a polyamine, an acid anhydride, a polyphenol, a polymercaptane, etc.

The catalyst type curing agent may be mentioned, for example, a tertiary amine, an imidazole, a Lewis acid complex, etc.

The curing method of these epoxy resins is not particularly limited, and carried out by the conventionally known method.

Incidentally, for the purpose of adjusting melt viscosity, flexibility, adhesiveness, etc., of the resin component, those in which two or more kinds of resin components are mixed may be used.

Next, the phenol resin may be mentioned, for example, a resol type phenol resin composition, etc.

The resol type phenol resin composition contains, for example, a resol type phenol resin as a main agent and a curing agent, etc.

The main agent of the phenol resin may be mentioned, for example, those obtained by reacting phenols such as phenol, cresol, xylenol, paraalkylphenol, paraphenylphenol, resorcine, etc., and a modified product thereof, with aldehydes such as formaldehyde, paraformaldehyde, furfural, acetaldehyde, etc., in the presence of a catalytic amount of an alkali such as sodium hydroxide, potassium hydroxide, calcium hydroxide, etc., but the invention is not limited by these.

A mixing ratio of the phenols, etc., and the aldehydes is not particularly limited, and is generally in the range of 1.0:1.5 to 1.0:3.0 with a molar ratio. The mixing ratio is preferably in the range of 1.0:1.8 to 1.0:2.5.

A curing agent of the phenol resin may be mentioned, for example, an inorganic acid such as sulfuric acid, phosphoric acid, etc., and an organic acid such as benzenesulfonic acid, ethylbenzenesulfonic acid, paratoluenesulfonic acid, xylenesulfonic acid, naphtholsulfonic acid, phenolsulfonic acid, etc.

Next, the urea resin may be mentioned, for example, a composition containing urea as a main agent, formaldehyde as a curing agent, and a basic compound or an acidic compound as a catalyst, etc.

The urea and formaldehyde, etc., form a urea resin by polymerization reaction.

Next, the unsaturated polyester resin may be mentioned a composition containing an unsaturated polybasic acid as a main agent, a polyol compound as a curing agent, and a catalyst, etc.

The unsaturated polyester resin as a main agent may be specifically mentioned, for example, maleic anhydride, fumaric acid, etc.

The curing agent of the unsaturated polyester resin may be specifically mentioned, for example, the polyol compound to be used for the urethane resin explained previously, etc.

The unsaturated polyester resin may further use a saturated polybasic acid such as phthalic anhydride, isophthalic acid, etc., in combination, if necessary.

Further, a vinyl monomer for cross-linking such as styrene, vinyl toluene, methyl methacrylate, etc., which polymerizes with the main agent of the unsaturated polyester resin may be added.

The catalyst of the unsaturated polyester resin may be specifically mentioned, for example, an organic peroxide such as t-butylperoxy benzoate, t-butylperoxy-2-ethylhexanoate, t-butylperoxyoctoate, t-butylperoxyisopropyl-carbonate, 1,1-di-t-butylperoxy-3,3,5-trimethylcyclohexanone, etc.

Next, the alkyd resin may be mentioned, for example, a composition containing a polybasic acid as a main agent, a polyol compound as a curing agent, and oil and fats, etc.

The main agent of the alkyd resin may be specifically mentioned, for example, maleic anhydride, phthalic anhydride, adipic acid, etc.

The curing agent of the alkyd resin may be specifically mentioned, for example, a polyol compound, etc., which is used in the urethane resin explained above.

The oil and fats may be mentioned, for example, soybean oil, coconuts oil, linseed oil, etc.

Next, the melamine resin may be mentioned, for example, a composition containing melamine as a main agent, and formaldehyde as a curing agent, etc.

Depending on necessity, benzoguanamine, etc., may be added to the composition.

Next, the diallylphthalate resin may be mentioned, for example, a composition containing a polybasic acid such as phthalic anhydride, etc., as a main agent, allyl alcohol, etc., as a curing agent, and a cross-linking agent, etc.

The cross-linking agent may be mentioned, for example, styrene, vinyl acetate, etc.

Next, the silicone resin may be mentioned, for example, a composition containing dialkylsilyl dichloride, dialkylsilyl diol, etc., as a main agent; trialkylsilyl chloride, trialkylsilyl diol, etc., as a reaction inhibitor; a platinum compound such as chloroplatinic acid, etc., as a curing agent, etc.

The dialkylsilyl dichloride may be specifically mentioned, for example, dimethylsilyl dichloride, diethylsilyl dichloride, dipropylsilyl dichloride, etc.

The dialkylsilyl diol may be specifically mentioned, for example, dimethylsilyl diol, diethylsilyl diol, dipropylsilyl diol, etc.

The trialkylsilyl chloride may be specifically mentioned, for example, trimethylsilyl chloride, triethylsilyl chloride, tripropylsilyl chloride, etc.

The trialkylsilyl diol may be specifically mentioned, for example, trimethylsilyl ol, triethylsilyl ol, tripropylsilyl ol, etc.

The reaction inhibitor has a role to control the polymerization degree of the polysiloxane main chain by bonding to the polysiloxane main chain and controlling the reaction.

The reaction curable resin component to be used in the present invention is preferably a thermosetting resin to prevent from easily melting when it is exposed to heat such as a fire, etc.

The reaction curable resin component to be used in the present invention is more preferably an epoxy resin, a urethane resin, a phenol resin, etc., in the point of handling property.

The reaction curable resin component to be used in the present invention may be used by provisionally reacting the main agent and the curing agent, etc.

The main agent, the curing agent, and the catalyst, etc., of the reaction curable resin component contained in the thermally expansible refractory material to be used in the present invention each may be used with a kind or two or more kinds.

When a foaming agent and a foam stabilizer are used in combination with the reaction curable resin component contained in the thermally expansible refractory material to be used in the present invention, the thermally expansible refractory material can be cured by the foamed state.

The foaming agent may be mentioned, for example, an organic series physical foaming agent including a hydrocarbon having a low boiling point such as propane, butane, pentane, hexane, heptane, cyclopropane, cyclobutane, cyclopentane, cyclohexane, cycloheptane, etc.; a chlorinated aliphatic hydrocarbon compound such as dichloroethane, propyl chloride, isopropyl chloride, butyl chloride, isobutyl chloride, pentyl chloride, isopentyl chloride, etc.; a fluorine compound such as trichloromonofluorometane, trichloro-trifluoroetane, etc.; an ether such as diisopropyl ether, etc.; or a mixture of these compounds, etc., an inorganic series physical foaming agent including a nitrogen gas, an oxygen gas, an argon gas, a carbon dioxide gas, etc., and water, etc.

An amount of the foaming agent to be used based on the reaction curable resin component may be optionally set depending on the reaction curable resin component to be used, and when an example is to be shown, for example, it is generally in the range of 1 to 20 parts by weight, preferably in the range of 5 to 10 parts by weight based on 100 parts by weight of the reaction curable resin component.

The foam stabilizer may be mentioned, for example, an organic silicon series surfactant, etc.

An amount of the foam stabilizer based on the reaction curable resin component may be optionally set depending on the reaction curable resin component to be used, and when an example is to be shown, for example, it is preferably in the range of 0.01 to 5 parts by weight based on 100 parts by weight of the resin component.

The foaming agent and the foam stabilizer each may be used with a kind or two or more kinds.

The reaction curable resin component to be used in the present invention preferably having a function of foaming for curing the thermally expansible refractory material in a foamed state, and more specifically, a kind or two or more kinds of a urethane resin foam, an isocyanurate resin foam, an epoxy resin foam, a phenol resin foam, a urea resin foam, an unsaturated polyester resin foam, an alkyd resin foam, a melamine resin foam, a diallylphthalate resin foam, a silicone resin foam, etc., are preferably used.

By curing the thermally expansible refractory material in a foamed state, heat insulating effect of a foam can be provided to the cured thermally expansible refractory material, and heat insulating property of an architectural member into which the thermally expansible refractory material has been injected, such as a door, a sash, etc., to be provided to the opening, etc., of the structure can be heightened.

Next, among the respective components of the thermally expansible refractory material, the thermally expansible component is explained.

The thermally expansible component is a material which expands at the time of heating, and specific examples of such a thermally expansible component may be mentioned, for example, an inorganic expansible component such as vermiculite, kaolin, mica, thermally expansive graphite, etc., and a pulverized product of a molded material of the thermally expansible resin composition, etc.

The thermally expansive graphite is a conventionally known substance, and a material in which a graphite intercalation compound is formed by treating powder such as natural flake graphite, pyrolytic graphite, kish graphite, etc., with an inorganic acid such as conc. sulfuric acid, nitric acid, selenic acid, etc., and a strong oxidizing agent such as conc. nitric acid, perchloric acid, a perchlorate, a permanganate, dichromate, dichromate, hydrogen peroxide, etc., and is a kind of a crystalline compound where a layered structure of the carbon is maintained.

The thermally expansive graphite obtained by subjecting to an acid treatment as mentioned above is preferably used after neutralizing with ammonia, an aliphatic lower amine, an alkali metal compound, an alkaline earth metal compound, etc.

The aliphatic lower amine may be mentioned, for example, monomethylamine, dimethylamine, trimethylamine, ethylamine, propylamine, butylamine, etc.

The alkali metal compound and the alkaline earth metal compound may be mentioned, for example, a hydroxide, an oxide, a carbonate, a sulfate, an organic acid salt, etc., of potassium, sodium, calcium, barium, magnesium, etc.

A grain size of the thermally expansive graphite is preferably in the range of 20 to 200 mesh.

If the grain size is 20 mesh or more, dispersibility is improved so that mixing and kneading with a resin component, etc., become easy. Also, if the grain size is 200 mesh or less, an expansion degree of graphite is large so that a sufficient refractory heat insulating layer tends to be easily obtained.

Commercially available products of the above neutralized thermally expansive graphite may be mentioned, for example, "GRAFGUARD#160" and "GRAFGUARD#220" manufactured by UCAR CARBON, and "GREP-EG" manufactured by TOSOH CORPORATION, etc.

The pulverized product of the molded material of the thermally expansible resin composition may be mentioned, for example, those in which commercially available thermally expansible refractory sheet is pulverized, etc.

Specific examples of the thermally expansible refractory sheet, etc., to be used for such a pulverized product of the molded material may be mentioned, for example, Fi-Block (Registered Trademark. A molded material of a thermally expansible resin composition containing a resin component such as an epoxy resin, a rubber resin, etc., a thermally expansible component such as thermally expansive graphite, etc., a phosphorus compound, and an inorganic filler, etc.) available from SEKISUI CHEMICAL CO., LTD., Fire Barrier (a sheet material comprising a resin composition containing chloroprene rubber and verculite, expansion rate: 3-fold, thermal conductivity: 0.20 kcal/m·h·°C) available from Sumitomo 3M Limited, Medihicut (a sheet material comprising a resin composition containing a polyurethane resin and thermally expansive graphite, expansion rate: 4-fold, thermal conductivity: 0.21 kcal/m·h·°C) available from Mitsui Kinzoku Paints & Chemicals Co., Ltd., etc.

The pulverized product of the molded material of the thermally expansible resin composition can be obtained by the method in which commercially available thermally expansible refractory sheets, etc., are finely cut by a cutting machine, etc., the method in which commercially available thermally expansible refractory sheet, etc., are pulverized by passing through a grinding mill, etc. The pulverized product of the molded material of the thermally expansible resin composition is preferably in the range of 5 to 20 mesh.

When the grain size of the pulverized product of the molded material of the thermally expansible resin composition is 5 mesh or more, dispersibility is improved so that mixing and kneading with a resin component, etc., become easy. Also, when the grain size is 20 mesh or less, an expansion degree of graphite is large so that a sufficient refractory heat insulating layer tends to be easily obtained.

Next, among the respective components of the previous thermally expansible refractory material, the inorganic filler is explained.

The inorganic filler is not particularly limited, and may be mentioned, for example, silica, diatomaceous earth, alumina, zinc oxide, titanium oxide, calcium oxide, magnesium oxide, iron oxide, tin oxide, antimony oxide, ferrites, calcium hydroxide, magnesium hydroxide, aluminum hydroxide, basic magnesium carbonate, calcium carbonate, magnesium carbonate, zinc carbonate, barium carbonate, dawsonite, hydrotalcite, calcium sulfate, barium sulfate, gypsum fiber, a potassium salt such as calcium silicate, etc., vermiculite, kaolin, mica, talc, clay, mica, montmorillonite, bentonite, activated clay, sepiolite, imogolite, sericite, glass fiber, glass beads, silica series balloon, aluminum nitride, boron nitride, silicon nitride, carbon black, graphite, carbon fiber, carbon balloon, charcoal powder, various kinds of metal powder, potassium titanate, magnesium sulfate, lead zirconate titanate, aluminum borate, molybdenum sulfide, silicon carbide, stainless fiber, zinc borate, various kinds of magnetic powder, slug fiber, fly ash, inorganic series phosphorus compound, silica-alumina fiber, alumina fiber, silica fiber, zirconia fiber, etc.

These may be used with a kind or two or more kinds in combination.

The inorganic filler acts as a role of an aggregate, and contributes to improve strength of the expansion heat insulating layer formed after heating or increase heat capacity of the same.

Therefore, a metal carbonate represented by calcium carbonate and zinc carbonate, and a hydrated inorganic product represented by aluminum hydroxide and magnesium hydroxide which act as a role like an aggregate as well as provide a heat absorption effect at the time of heating are preferred, and a carbonate of an alkali metal, an alkaline earth metal, and a metal of Group IIb of the Periodic Table or a mixture of these compounds and the hydrated inorganic product are preferred.

Also, to the thermally expansible refractory material to be used in the present invention, a phosphorus compound may be added as a flame retardant.

The phosphorus compound is used to improve flame resistance, or to develop a thermally expansible function in combination with a nitrogen compound, an alcohol, etc.

The phosphorus compound is not particularly limited, and may be mentioned, for example, red phosphorus, various kinds of phosphoric acid esters such as triphenyl phosphate, tricresyl phosphate, trixylenyl phosphate, cresyldiphenyl phosphate, xylenyldiphenyl phosphate, etc., a phosphoric acid metal salt such as sodium phosphate, potassium phosphate, magnesium phosphate, etc., ammonium polyphosphates, the compound represented by the following formula 1, etc.

These phosphorus compounds may be used with a kind or two or more kinds in combination.

Among these, in the viewpoint of fire resistance, red phosphorus, the compound represented by the following formula, and, ammonium polyphosphates are preferred, and ammonium polyphosphates are more preferred in the points of properties, safety, cost, etc. 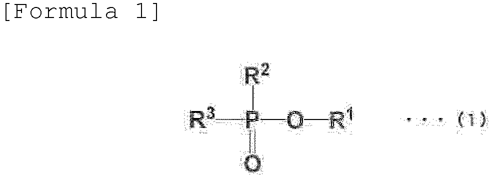 In the above chemical formula, R¹ and R³ each represent a hydrogen, a linear or branched alkyl group having 1 to 16 carbon atoms, or, an aryl group having 6 to 16 carbon atoms.

R² represent a hydroxyl group, a linear or branched alkyl group having 1 to 16 carbon atoms, a linear or branched alkoxyl group having 1 to 16 carbon atoms, an aryl group having 6 to 16 carbon atoms, or, an aryloxy group having 6 to 16 carbon atoms.

The compound represented by the formula may be mentioned, for example, methylphosphonic acid, dimethyl methylphosphonate, diethyl methylphosphonate, ethylphosphonic acid, propylphosphonic acid, butylphosphonic acid, 2-methylpropylphosphonic acid, t-butylphosphonic acid, 2,3-dimethylbutylphosphonic acid, octylphosphonic acid, phenylphosphonic acid, dioctylphenylphosphonate, dimethylphosphinic acid, methylethylphosphinic acid, methylpropylphosphinic acid, diethylphosphinic acid, dioctylphosphinic acid, phenylphosphinic acid, diethylphenylphosphinic acid, diphenylphosphinic acid, bis(4-methoxyphenyl)phosphinic acid, etc.

Above all, whereas t-butylphosphonic acid is expensive, it is preferred in the point of high flame resistance.

Ammonium polyphosphates is not particularly limited, and may be mentioned, for example, ammonium polyphosphate, melamine-modified ammonium polyphosphate, etc., and in the points of flame resistance, safety, a cost, handling property, etc., ammonium polyphosphate is suitably used.

Commercially available products may be mentioned, for example, "Trade name: EXOLITAP422" and "Trade name: EXOLITAP462" available from Clariant K.K., etc.

The phosphorus compound is considered to promote expansion of the metal carbonate by reacting with a metal carbonate such as calcium carbonate, zinc carbonate, etc., and in particular, when ammonium polyphosphate is used as the phosphorus compound, high expansion effect can be obtained.

It also acts as an effective aggregate, and forms a residue having high shape retaining property after burning.

The nitrogen compound is not particularly limited, and preferably a melamine series compound, etc. Also, the alcohols are not particularly limited, and preferably a polyvalent alcohol such as pentaerythritol, etc.

When the inorganic filler to be used in the present invention is a particulate, the particle size is preferably within the range of 0.5 to 200 µm, more preferably within the range of 1 to 50 µm.

When an amount of the inorganic filler to be added is a little, the dispersibility markedly affects to the properties so that a material having a small particle size is preferred, and when the particle size is 0.5 µm or more, secondary aggregation can be prevented and dispersibility becomes good.

Also, when an amount of the inorganic filler to be added is much, a viscosity of the resin composition becomes high with the progress of highly filling and moldability is lowered, but in the point that the viscosity of the resin composition can be lowered by making the particle size large, that having a large particle size is preferred among the above-mentioned range.

Incidentally, when the particle size is 200 µm or less, it can suppress to lower the surface property of the molded product and the mechanical property of the resin composition.

Among the inorganic fillers, in particular, a metal carbonate such as calcium carbonate, zinc carbonate, etc., which acts as a role like an aggregate; and a hydrated inorganic product such as aluminum hydroxide, magnesium hydroxide, etc., which acts as a role like an aggregate as well as provide a heat absorption effect at the time of heating are preferred.

To use the hydrated inorganic product and the metal carbonate in combination is considered to be markedly contributed to improve strength of the combustion residue or to increase heat capacity.

Among the inorganic fillers, in particular, a hydrated inorganic product such as aluminum hydroxide, magnesium hydroxide, etc., is preferred in the points that high heat resistance can be obtained by reducing raising of the temperature since heat absorption occurs due to water formed by the dehydration reaction at the time of heating, and strength of the combustion residue is improved since an oxide remains as the combustion residue which acts as an aggregate.

Also, magnesium hydroxide and aluminum hydroxide are preferably used in combination since temperature regions showing their dehydrating effects are different from each other so that these are used in combination, the temperature regions showing the dehydrating effect are broadened whereby more effective suppressing effects against raising the temperature can be obtained.

When a particle size of the hydrated inorganic product is small, the bulk becomes large and highly filling becomes difficult so that a material having a large particle size is preferred to accomplish higher filling for heightening the dehydration effect.

More specifically, when the particle size is 18 µm, it has been known that a filling limit amount increases about 1.5-fold as compared with that of the particle size of 1.5 µm.

Further, by combining a material having a large particle size and that having a small size, higher filling is possible.

Commercially available products of the hydrated inorganic product may be mentioned, for example, as aluminum hydroxide, "Trade name: HIGILITE H-42M" (available from SHOWA DENKO K.K.) having a particle size of 1 µm, "Trade name: HIGILITE H-31" (available from SHOWA DENKO K.K.) having a particle size of 18 µm, etc.

Commercially available products of the calcium carbonate may be mentioned, for example, "Trade name: Whiton SB Red" (available from SHIRAISHI CALCIUM KAISHA Ltd.) having a particle size of 1.8 µm, "Trade name: BF300" (available from BIHOKU FUNKA KOGYO CO., LTD.) having a particle size of 8 µm, etc.

As explained at the beginning, thermally expansible refractory material to be used in the present invention may be mentioned may be mentioned a resin composition containing the reaction curable resin component, the thermally expansible component and the inorganic filler, etc., as explained above, and those further containing the above-mentioned phosphorus compound, etc., and the formulation thereof is explained as follows.

The thermally expansible refractory material preferably contains the thermally expansible component in the range of 10 to 150 parts by weight and the inorganic filler in the range of 10 to 300 parts by weight based on 100 parts by weight of the reaction curable resin component.

Also, a total amount of the thermally expansible component and the inorganic filler is preferably in the range of 30 to 300 parts by weight.

Such a thermally expansible refractory material expands by heat of a fire, etc., to form a thermal expansion residue. According to the formulation, the thermally expansible refractory material expands by heat of a fire, etc., to obtain a necessary volume expansion ratio, and after expansion, a thermal expansion residue having a predetermined heat insulating property as well as a predetermined strength can be formed and a stable refractory performance can be accomplished.

When an amount of the reaction curable thermally expansible component is 10 parts by weight or more, necessary expansion ratio can be obtained so that a sufficient refractory and fire resistant properties can be obtained.

On the other hand, when an amount of the thermally expansible component is 150 parts by weight or less, fluidity of the thermally expansible refractory material at 25°C can be ensured.

Also, when the amount of the inorganic filler is 10 parts by weight or more, a volume reduction of the thermal expansion residue after burning is a little, and a thermal expansion residue for fire-proof and heat insulation can be obtained.

Further, a ratio of combustibles increases so that flame resistance is lowered in some cases.

On the other hand, when the amount of the inorganic filler is 300 parts by weight or less, fluidity of the thermally expansible refractory material at 25°C can be assured.

When the total amount of the thermally expansible component and the inorganic filler in the thermally expansible refractory material is 60 parts by weight or more, an amount of the thermal expansion residue after burning is not insufficient and sufficient refractory performance can be easily obtained, and it is 450 parts by weight or less, lowering in mechanical properties is low and it is suitable for practical use.

Further, the thermally expansible refractory material to be used in the present invention may contain, in addition to a plasticizer such as a phthalic acid ester, an adipic acid ester, a phosphoric acid ester, etc., and an antioxidant such as a phenol series, an amine series, a sulfur series, etc., an additive such as a heat stabilizer, a metal damage preventing agent, an antistatic agent, a stabilizer, a cross-linking agent, a lubricant, a softening agent, a pigment, a tackifier resin, etc., and a tackifier such as a polybutene, a petroleum resin, etc., if necessary, within the range which does not impair the objects of the present invention.

A viscosity of the thermally expansible refractory material to be used in the present invention at 25°C is in the range of 1,000 to 100,000 mPa·s based on the value before injecting into the inside of the architectural member.

If the viscosity is 1,000 mPa·s or higher, the thermally expansible refractory material can be easily filled even in a narrow gap at the inside of the architectural member. Also, a pressure for injecting the thermally expansible refractory material into the inside of the architectural member, or a pressing force of an injection apparatus is not increased more than the necessary level, and injection can be carried out easily. Further, sufficient refractory performance can be shown.

Also, if the viscosity is 100,000 mPa·s or less, an air is difficultly involved when the thermally expansible refractory material is injected into the inside of the architectural member and a desired filling amount can be easily injected. Further, at the time of injection, the respective components of the thermally expansible refractory material are difficultly separated, and it can be prevented from becoming ununiform, so that the composition of the thermally expansible refractory material can be maintained uniformly at the inside of the architectural member, whereby a desired refractory performance can be shown.

The viscosity is preferably in the range of 2,000 to 60,000 mPa·s, more preferably in the range of 10,000 to 40,000 mPa·s.

The thermally expansible refractory material to be used in the present invention cures by the reaction, and the viscosity changes with a lapse of time.

Thus, in the present invention, when the thermally expansible refractory material to be used is divided into two or more, and the value in which viscosities depending on the respective weight ratios are added is made the viscosity of the thermally expansible refractory material.

For example, when a viscosity of one of the thermally expansible refractory materials divided into two is 10000 mPa·s, and a viscosity of the other of the divided one is 40000 mPa·s, and a formulated weight ratio of these is 60:40, the viscosity becomes (10,000×0.6+40,000×0.4)=22,000 mPa·s.

In this case, the respective components of the thermally expansible refractory material divided into two can be stably preserved at 25°C so as to not hinder measurement of the viscosity, and the respective components are so divided that the curing reaction starts after mixing the respective components of the thermally expansible refractory material divided into two.

It is the same when the thermally expansible refractory material to be used is divided into three or more.

Adjustment of the viscosity of the thermally expansible refractory material can be carried out by selecting a kind of the reaction curable resin component of the thermally expansible refractory materials to be used in the present invention, etc. Among the liquid state reaction curable resin components, by selecting a material having a low viscosity at 25°C, the viscosity of the thermally expansible refractory material at 25°C can be made low. To the contrary, among the liquid state reaction curable resin components, by selecting a material having a high viscosity at 25°C, the viscosity of the thermally expansible refractory material at 25°C can be made high.

Also, adjustment of the viscosity of the thermally expansible refractory material can be also carried out by changing the weight ratio of the thermally expansible component and the inorganic filler contained in the thermally expansible refractory material.

For example, when the weight ratios of the thermally expansible component and the inorganic filler, etc., contained in the thermally expansible refractory material is reduced, the viscosity of the thermally expansible refractory material at 25°C can be made small. In addition, by optionally selecting a liquid state inorganic filler at a temperature of 25°C, the viscosity can be also made low.

Further, to the contrary, when the weight ratios of the thermally expansible component and inorganic filler, etc., contained in the thermally expansible refractory material are increased, the viscosity of the thermally expansible refractory material at 25°C can be made high.

Next, a preparation method of the thermally expansible refractory material is explained.

The preparation method of the thermally expansible refractory material is not particularly limited, and, for example, by the method in which the thermally expansible refractory material is suspended in an organic solvent or melted by heating to prepare a paint state, the method in which it is dispersed in a solvent to prepare a slurry, and when a component which is a solid at a temperature of 25°C is contained in the reaction curable resin component contained in the thermally expansible refractory material, the method in which the thermally expansible refractory material is melted under heating, etc., the resin composition can be obtained.

The thermally expansible refractory material can be obtained by mixing and kneading the respective components of the thermally expansible refractory material by using a conventionally known device such as a single screw extruder, a twin screw extruder, a Bunbary mixer, a kneader mixer, a kneading roller, a Raikai mixer, a planetary stirring machine, etc.

Also, a main agent having a reactive functional group such as an isocyanate group, an epoxy group, etc., and a curing agent are separately mixed and kneaded with a filler, etc., and the material can be obtained by mixing and kneading these agents immediately before the injection by using a static mixer, a dynamic mixer, etc.

Further, the components of the thermally expansible refractory material except for the catalyst, and the catalyst are similarly mixed and kneaded immediately before the injection whereby the material can be obtained.

According to the method as explained above, the thermally expansible refractory material to be used in the present invention can be obtained.

The reaction curable type thermally expansible resin composition obtained as mentioned above has fluidity at a temperature of 25°C, so that it can be injected into the inside of the architectural member.

Here, "has fluidity" means that the material does not have a fixed shape when the thermally expansible refractory material is allowed to stand, and "does not have fluidity" means that the material has a fixed shape when the thermally expansible refractory material is allowed to stand.

The thermally expansible refractory resin member is not particularly limited so long as it can insulate the heat when it is exposed to a high temperature at the time of the fire, etc., by the expansion layer and the expansion layer has strength, and is preferably a material having a volume expansion ratio after heating in an electric furnace set at 600°C for 30 minutes of 1.1 to 6-fold.

If the volume expansion ratio is lower than 1.1-fold, the expanded volume cannot sufficiently fill up the destroyed portion of the resin component by fire, and the fire resistant properties are sometimes lowered. Also, if it exceeds 6-fold, strength of the expansion layer is lowered, and an effect of preventing penetration of flame is sometimes lowered. The volume expansion ratio is more preferably in the range of 1.2 to 5-fold, further preferably in the range of 1.3 to 4-fold.

For the expansion layer to stand itself, the expansion layer is required to have large strength, and the strength is preferably 0.05 kgf/cm² or more when a stress at breaking point of a sample of the expansion layer is measured by a compression tester with a compression rate of 0.1 m/s using a probe of 0.25 cm². If the stress at breaking point is lower than 0.05 kgf/cm², the heat insulating expansible layer cannot stand itself and fire resistant properties are lowered in some cases. It is more preferably 0.1 kgf/cm² or more.

Next, the present invention is explained based on the drawings and referring to Examples, but the present invention is not limited by these Examples.

### Example 1

In Example 1, a refractory reinforcement architectural member 200 is prepared and a refractory test was performed. The test and the results are explained.

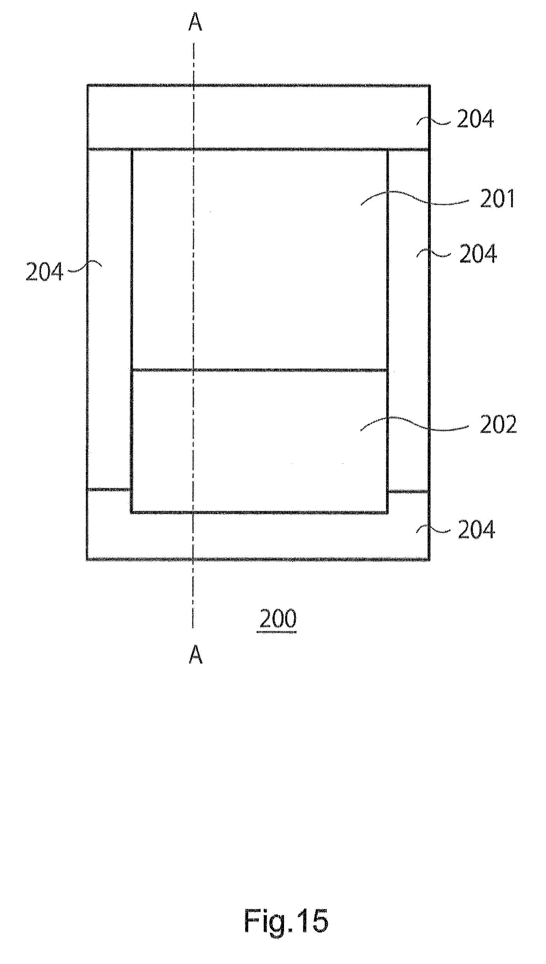

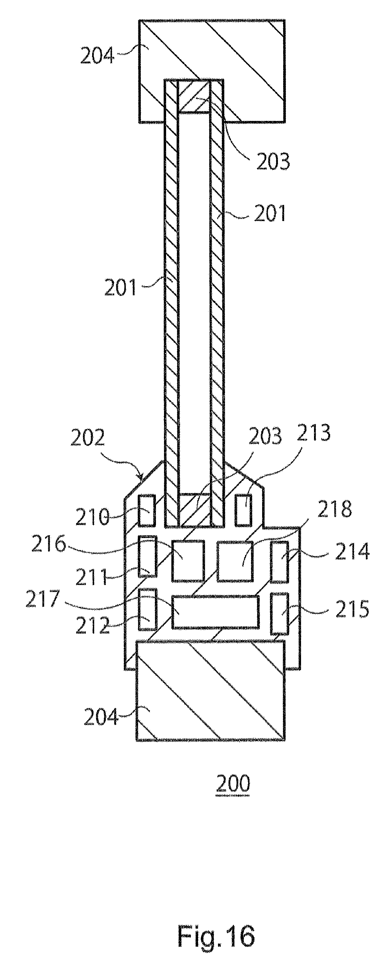

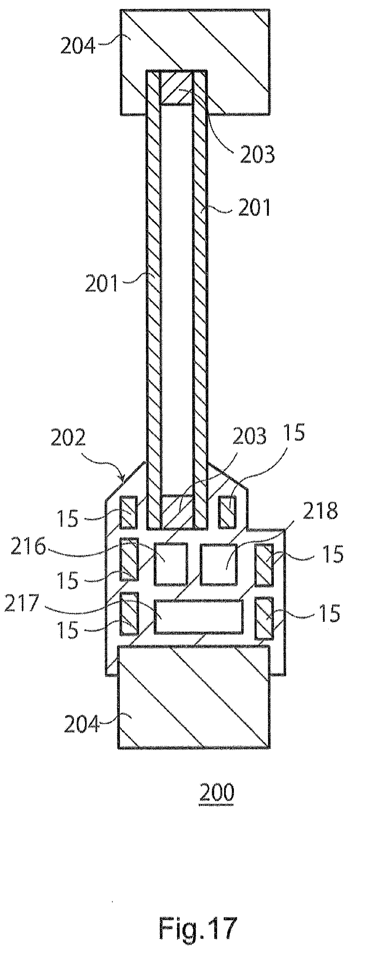

Fig. 15 is a schematic front view for explaining the structure of the refractory reinforcement architectural member 200 according to Example 1 of the present invention. Also, Fig. 16 is a principal part cross sectional view of the refractory reinforcement architectural member along with the line A-A of Fig. 15 before injecting the thermally expansible refractory material 15 thereinto, and Fig. 17 is a principal part cross sectional view of the refractory reinforcement architectural member along with the line A-A of Fig. 8 after injecting the thermally expansible refractory material 15 into a part of the frame body.

As shown in Fig. 15, plate materials 201 having fire resistance and comprising a calcium silicate plate are supported by a frame material 202 comprising a rigid vinyl chloride in which a cavity is formed at the inside thereof along with the longitudinal direction.

Between the plate materials 201 and 201, a frame material 203 is provided along with the outer peripheral of the plate materials 201.

Also, to reproduce an opening of the structures such as a residence, etc., for the refractory test, the periphery of the plate material 201 and the frame material 202 each having fire resistance are surrounded by a concrete molded material 204 without any gap.

As shown in Fig. 16, a plural number of cavities 210 to 218 are provided at the inside of the frame material 202 of the refractory reinforcement architectural member 200 along with the longitudinal direction.

Next, according to the formulations shown in Table 1, the thermally expansible refractory material 15 was divided into Component A and Component B, and each component was stirred by using a planetary stirring machine.

More specifically, a polyurethane resin was used as the thermally expansible refractory material. A polyether polyol was used as a curing agent of the polyurethane resin which is a resin component of Component A, and a polyisocyanate compound was used as a main agent of the polyurethane resin which is a resin component of Component B.

The polyisocyanate compound which is a main agent of the urethane resin and the polyether polyol which is a curing agent were so adjusted that a ratio (NCO/OH) of an active hydrogen group (OH) in the polyol compound and an active isocyanate group (NCO) in the polyisocyanate compound became 1.64:1 with an equivalent ratio.

Next, viscosities of Component A and Component B were measured. For the measurement of the viscosity, by using a B type rotary viscometer (manufactured by VISCOTECH CO., LTD.), a viscosity at 25°C was measured. A rotation number of the B type rotary viscometer at the time of measurement was made 10 rpm, and a spindle of R5 was used.

The respective viscosities of the obtained Component A and Component B were added with the ratio of the weight ratio of Component A and Component B and the whole viscosity was obtained. The value is shown in Table 1.

Example 2 and the following are the same.

Next, as shown in Fig. 16 and Fig. 17, among the cavities of the frame material 202 comprising a rigid vinyl chloride in which cavities are formed at an inside thereof along with the longitudinal direction, the Component A and Component B were injected into the insides of the cavities 210, 211, 212, 213, 214 and 215 which were located at the outermost side while maintaining the above-mentioned mixing ratio. The injected thermally expansible refractory material 15 were cured while foaming at the inside of the cavities 210, 211, 212, 213, 214 and 215 to lose fluidity, and to form an urethane resin foam.

Next, a refractory test of the refractory reinforcement architectural member 200 was carried out according to the conditions of IS0834. The refractory test was carried out until a flame penetrates the refractory reinforcement architectural member 200.

As a result of the refractory test, the case where no leakage of the flame was admitted for 20 minutes or longer from the surface of the opposite side to the heating surface was judged as ?, and the case where leakage of the flame was admitted shorter than 20 minutes was judged as ×. The results are also mentioned in Table 1.

When the refractory test was started, the thermally expansible refractory material 15 at the side of the heating surface was expanded to form a thermal expansion residue. After 20 minutes were lapsed, in the refractory reinforcement architectural member 200 of Example 1, no leakage of the flame was admitted. After 30 minutes were lapsed, leakage of the flame could be observed.

### Example 2

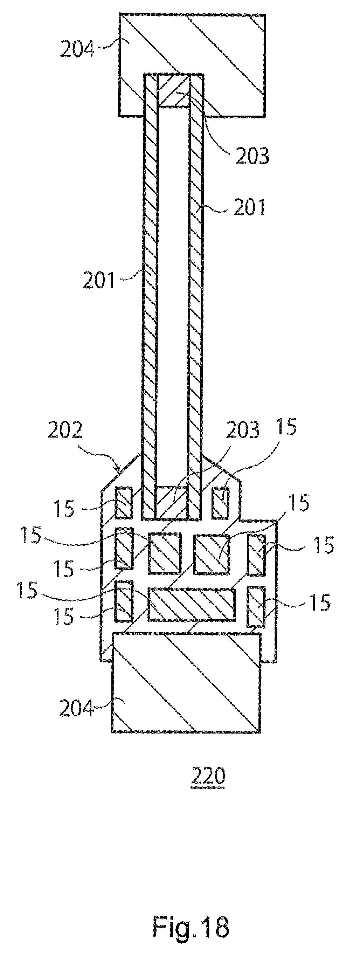

The refractory test was carried out completely the same manner as in Example 1 except that amounts of the inorganic filler, the thermally expansible component and the phosphorus compound were changed to the amounts as shown in Table 1, and as shown in Fig. 18, the thermally expansible refractory material 15 was injected into all the cavities 210 to 218 of the frame material 202 comprising a rigid vinyl chloride in which cavities have been formed at the inside thereof along with the longitudinal direction in the case of Example 1.

When the refractory test was started, the thermally expansible refractory material 15 at the side of the heating surface was expanded to form a thermal expansion residue. After 20 minutes were lapsed, in the refractory reinforcement architectural member 220 of Example 2, no leakage of the flame was admitted. After 28 minutes were lapsed, leakage of the flame could be observed.

### Example 3

The refractory test was carried out completely the same manner as in Example 1 except that amounts of the inorganic filler, the thermally expansible component and the phosphorus compound were changed to the amounts as shown in Table 1 in the case of Example 1.

When the refractory test was started, the thermally expansible refractory material 15 at the side of the heating surface was expanded to form a thermal expansion residue. After 20 minutes were lapsed, in the refractory reinforcement architectural member 220 of Example 2, no leakage of the flame was admitted. After 23 minutes were lapsed, leakage of the flame could be observed.

### Example 4

The refractory test was carried out completely the same manner as in Example 1 except that amounts of the inorganic filler, the thermally expansible component and the phosphorus compound were changed to the amounts as shown in Table 1, and as shown in Fig. 18, the thermally expansible refractory material 15 was injected into all the cavities 210 to 218 of the frame material 202 comprising a rigid vinyl chloride in which cavities have been formed at the inside thereof along with the longitudinal direction in the case of Example 1.

When the refractory test was started, the thermally expansible refractory material 15 at the side of the heating surface was expanded to form a thermal expansion residue. After 20 minutes were lapsed, in the refractory reinforcement architectural member 220 of Example 2, no leakage of the flame was admitted. After 25 minutes were lapsed, leakage of the flame could be observed.

### [Comparative Example 1]

The refractory test was carried out completely the same manner as in Example 1 except that the thermally expansible component was not used, and as shown in Fig. 18, the thermally expansible refractory material 15 was injected into all the cavities 210 to 218 of the frame material 202 comprising a rigid vinyl chloride in which cavities have been formed at the inside thereof along with the longitudinal direction in the case of Example 1.

When the refractory test was started, the thermally expansible refractory material 15 at the side of the heating surface was retained the shape, but shrinkage gradually occurred to form a thermal expansion residue. After 15 minutes were lapsed, leakage of the flame could be observed.

### [Comparative Example 2]

The refractory test was carried out completely the same manner as in Example 1 except that the thermally expansible component and the phosphorus compound were not used, and as shown in Fig. 18, the thermally expansible refractory material 15 was injected into all the cavities 210 to 218 of the frame material 202 comprising a rigid vinyl chloride in which cavities have been formed at the inside thereof along with the longitudinal direction in the case of Example 1.

After 8 minutes were lapsed, leakage of the flame could be observed.

### [Comparative Example 3]

The refractory test was carried out completely the same manner as in Example 1 except that the thermally expansible component and the phosphorus compound were not used, and as shown in Fig. 18, the thermally expansible refractory material 15 was injected into all the cavities 210 to 218 of the frame material 202 comprising a rigid vinyl chloride in which cavities have been formed at the inside thereof along with the longitudinal direction in the case of Example 1.

After 8 minutes were lapsed, leakage of the flame could be observed.

### [Comparative Example 4]

The refractory test was carried out completely the same manner as in Example 1 except that formulation amounts of the filler, the thermally expansible component and the phosphorus compound were reduced to lower the viscosity of the whole components, and as shown in Fig. 18, the thermally expansible refractory material 15 was injected into all the cavities 210 to 218 of the frame material 202 comprising a rigid vinyl chloride in which cavities have been formed at the inside thereof along with the longitudinal direction in the case of Example 1.

When the refractory test was started, the thermally expansible refractory material 15 at the side of the heating surface was retained the shape, but shrinkage gradually occurred to form a thermal expansion residue. After 5 minutes were lapsed, leakage of the flame could be observed.

### [Comparative Example 4]

The refractory test was carried out completely the same manner as in Example 1 except that formulation amounts of the filler, the thermally expansible component and the phosphorus compound were increased to heighten the viscosity of the whole components, and as shown in Fig. 18, the thermally expansible refractory material 15 was injected into all the cavities 210 to 218 of the frame material 202 comprising a rigid vinyl chloride in which cavities have been formed at the inside thereof along with the longitudinal direction in the case of Example 1.

The thermally expansible refractory material 15 was substantially not fluidized and handling thereof was extremely difficult.

When the refractory test was started, the thermally expansible refractory material 15 at the side of the heating surface was retained the shape, but shrinkage gradually occurred to form a thermal expansion residue. After 32 minutes were lapsed, leakage of the flame could be observed.

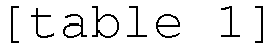

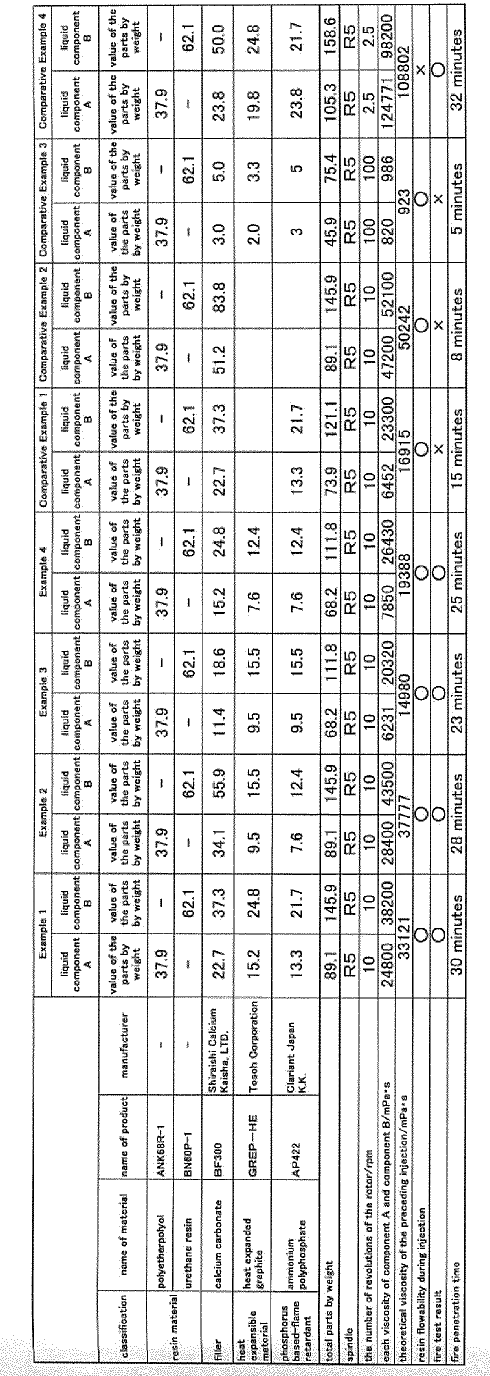

**REFERENCE SIGNS LIST**

| | |
|---|---|
| 1, 100, 200, 220 | Refractory reinforcement architectural members |
| 10, 50 | Opening frame bodies |
| 11, 12, 53, 54 | Vertical frame bodies |
| 11a, 12a, 11b, 12b,21a, 22a, 210 to 218 | Cavities |
| 13, 14, 51, 52 | Horizontal frame bodies |
| 15 | Thermally expansible refractory material |
| 20, 60, 201 | Plate materials |
| 21, 22 | Vertical cabinets |
| 23, 24 | Horizontal cabinets |
| 25 | Window glass |
| 26 | Rubber sealing material, sealing agent |
| 30 to 33 | Holes |
| 30a, 30b | Outer surfaces of steel material cross section of which is H character shape |
| 40 | Stud |
| 41, 42 | Calcium silicate plates |
| 70 | Heat insulating material |
| 80 | Doorknob |
| 90 | Block |
| 91 | Concrete wall |
| 92 | Through hole(s) |
| 93 | Pipes |
| 202, 203 | Frame materials |
| 204 | Concrete molded material |
| 300 | Refractory reinforcement structure |
| 400, 450 | Bags |
| 401 | Aluminum laminated nonwoven fabric |
| 410 | Aluminum laminated polypropylene |
| 402 to 405, 411 to 416 | Peripheral edge portions |
| 418 | Center portion |
| 421 | First component storage part (a-1) |
| 422 | Second component storage part (a-2) |
| 430 | Cylinder member |
| 431, 432 | Fixed portions |
| 433 | Lid material |
| 440 | Projected portion |
| 440a | Tip division |
| 461, 466 | Aluminum foils |
| 467, 477 | Polypropylenes |
| 501 | Steel material |
| 502 | Inorganic heat resistant panel |
| 503 | Supporting structure member |
| 504 | steel frame |
| 505 | T shape joint filler |
| 506 | Heat resistant panel |
| 507 | Roof member |
| 508, 522, 533 | Gaps |
| 509, 523, 534 | Thermally expansible refractory materials |
| 520, 530 | Wood plates |
| 521 | Pillar made of wood |
| 524 | Outer wall comprising steel plate |
| 532 | Metal stud |
| 531 | Inorganic board |

## Claims

1. A refractory reinforcement structure which is a refractory reinforcement structure in which a thermally expansible refractory material is injected into at least one of a gap and an inside of an architectural member,
a viscosity at 25°C of the thermally expansible refractory material before injecting into at least one of the gaps and the inside of the architectural member is in a range of 1,000 to 100,000 mPa·s, and
the thermally expansible refractory material loses its fluidity at 25°C after injecting into at least one of the gaps and the inside of the architectural member.

2. The refractory reinforcement structure according to claim 1,
wherein the refractory reinforcement structure contains a refractory reinforcement architectural member in which a thermally expansible refractory material is injected into an architectural member having a hollow part,
the architectural member has at least a frame material in which a cavity is formed at an inside thereof along with the longitudinal direction, and a plate material having fire resistance,
the plate material having fire resistance is supported by the frame material, and the thermally expansible refractory material is injected into a cavity at an inside of the frame material.

3. The refractory reinforcement structure according to claim 1,
wherein the refractory reinforcement structure is a refractory reinforcement structure containing a refractory reinforcement architectural member in which a thermally expansible refractory material is injected into at least one of the gaps and the inside of the architectural member,
the architectural member has two or more plate materials, and
the thermally expansible refractory material is injected into a space formed between the plate materials facing to each other.

4. The refractory reinforcement structure according to claim 1,
wherein the refractory reinforcement structure is a refractory reinforcement structure containing a partition provided at a compartment of the structure, a through hole(s) provided at the partition, and pipes inserted into the through hole(s),
the gap of the architectural member is a gap between an inner surface of the through hole(s) and an outer surface of the pipes, and
the thermally expansible refractory material is injected into the gap between the inner surface of the through hole(s) and the outer surface of the pipes.

5. The refractory reinforcement structure according to claim 3,
wherein a net-shaped sheet is arranged at least one of the gaps and the inside of the architectural member.

6. The refractory reinforcement structure according to claim 1,
wherein the thermally expansible refractory material contains at least a reaction curable resin component, a thermally expansible component and an inorganic filler.

7. The refractory reinforcement structure according to claim 6,
wherein the reaction curable resin component contained in thermally expansible refractory material is at least one selected from the group consisting of a urethane resin foam, an isocyanurate resin foam, an epoxy resin foam, a phenol resin foam, a urea resin foam, an unsaturated polyester resin foam, an alkyd resin foam, a melamine resin foam, a diallylphthalate resin foam and a silicone resin foam.

8. The refractory reinforcement structure according to claim 7,
wherein the thermally expansible component contained in the thermally expansible refractory material contains at least one of thermally expansive graphite and a pulverized product of a molded material of the thermally expansible resin composition.

9. The refractory reinforcement structure according to claim 8,
wherein the thermally expansible refractory material contains a phosphorus compound.

10. The refractory reinforcement structure according to claim 9,
wherein the inorganic filler contained in the thermally expansible refractory material contains calcium carbonate.

11. a refractory reinforcement method for an architectural member which is a refractory reinforcement method of an architectural member installed to a structure, and comprises at least
a step of injecting a thermally expansible refractory material having a viscosity at 25°C of in a range of 1,000 to 100,000 mPa·s into at least one of a gap and an inside of the architectural member, and
a step of reacting the thermally expansible refractory material in at least one of the gaps and the inside of the architectural member to lose fluidity of the thermally expansible refractory material.

12. The refractory reinforcement method according to claim 11,
wherein the architectural member has at least a frame material in which a cavity is formed at an inside thereof along with a longitudinal direction and a plate material having fire resistance, and
the plate material having fire resistance is supported by the frame material, and the method comprises a step of injecting the thermally expansible refractory material into the cavity at the inside of the frame material, and a step of losing fluidity of the thermally expansible refractory material by reacting the thermally expansible refractory material at the cavity at the inside of the frame material.

13. The refractory reinforcement method according to claim 11,
wherein the architectural member has two or more plate materials, and the method comprises
a step of injecting the thermally expansible refractory material into a space formed between the plate materials which face each other, and
a step of reacting the thermally expansible refractory material at the inside of the space to lose fluidity of the thermally expansible refractory material.

14. The refractory reinforcement method according to claim 11,
wherein the architectural member contains a partition provided at a compartment of the structure, a through hole(s) provided at the partition, and pipes inserted into the through hole(s), and the method comprises
a step of injecting the thermally expansible refractory material into the gap the inside of the through hole(s) and the outside of the pipes, and
a step of reacting the thermally expansible refractory material at the gap between the inside of the through hole(s) and the outside of the pipes to lose fluidity of the thermally expansible refractory material.

15. The refractory reinforcement method according to claim 11,
wherein the thermally expansible refractory material contains at least a reaction curable resin component, a thermally expansible component and an inorganic filler.

16. The refractory reinforcement method according to claim 12,
wherein the reaction curable resin component contained in the thermally expansible refractory material is at least one selected from the group consisting of a urethane resin foam, an isocyanurate resin foam, an epoxy resin foam, a phenol resin foam, a urea resin foam, an unsaturated polyester resin foam, an alkyd resin foam, a melamine resin foam, a diallylphthalate resin foam and a silicone resin foam.

17. The refractory reinforcement method according to claim 16,
Wherein the refractory reinforcement method is a refractory reinforcement method using a bag into which a thermally expansible refractory material is put therein,
wherein
the step of injecting the thermally expansible refractory material into at least one of the gaps and the inside of the architectural member comprises
a step of initiating expansion of the reaction curable resin component contained in the thermally expansible refractory material put into the bag,
a step of releasing the thermally expansible refractory material containing the reaction curable resin component started to expansion from the bag, and
a step of injecting the released thermally expansible refractory material into at least one of the gaps and the inside of the architectural member.

18. A refractory reinforcement architectural member to be used for the refractory reinforcement structure described in any one of the above claim 1 to Claim 10, wherein the architectural member is either of pipes, a door, sash, wall, a roof or a floor,
the refractory reinforcement architectural member comprises a thermally expansible refractory material being injected thereinto,
a viscosity at 25°C of the thermally expansible refractory material before injecting into at least one of the gaps and the inside of the architectural member is in a range of 1,000 to 100,000 mPa·s, and
the thermally expansible refractory material loses its fluidity at 25°C after injecting into at least one of the gaps and the inside of the architectural member.

19. The refractory reinforcement architectural member according to claim 18,
the refractory reinforcement architectural member comprises a refractory reinforcement architectural member in which a thermally expansible refractory material is injected into an inside of an architectural member having a hollow part.

20. The refractory reinforcement architectural member according to claim 18 or 19,
wherein the thermally expansible refractory material is injected by contacting with at least one of an inner surface of a cavity at the outermost side among the cavities at the inside of the frame material and an inner surface of a space at the outermost side among the spaces formed between the plate materials.

21. The refractory reinforcement architectural member according to claim 18 or 19,
wherein the archi-tectural member is at least one selected from the group consisting of a synthetic resin material, a metal material, a wood material and an inorganic material.
